(19) Europäisches Patentamt
European Patent Office
Office européen des brevets

(11) EP 2 781 577 A1

(12) **EUROPEAN PATENT APPLICATION**
published in accordance with Art. 153(4) EPC

(43) Date of publication:
24.09.2014 Bulletin 2014/39

(21) Application number: 12848877.2

(22) Date of filing: 15.11.2012

(51) Int Cl.:
*C09K 11/79* (2006.01)　　*C09K 11/08* (2006.01)

(86) International application number:
PCT/JP2012/079596

(87) International publication number:
WO 2013/073598 (23.05.2013 Gazette 2013/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 15.11.2011 JP 2011250153
15.11.2011 JP 2011250152

(71) Applicant: Mitsubishi Chemical Corporation
Chiyoda-ku
Tokyo 100-8251 (JP)

(72) Inventors:
• TAKASHINA, Shiho
Kanagawa 250-0862 (JP)
• OHTO, Akihiro
Kanagawa 250-0862 (JP)
• KIM, Doohun
Kanagawa 250-0862 (JP)

(74) Representative: HOFFMANN EITLE
Patent- und Rechtsanwälte
Arabellastrasse 4
81925 München (DE)

(54) **NITRIDE PHOSPHOR AND METHOD OF PRODUCING SAME**

(57) Problem to be solved is to provide a nitride phosphor having enhanced luminance, internal quantum efficiency and external quantum efficiency compared to those of conventional nitride phosphors. The nitride phosphor is represented by the general formula (1) shown below and it is characterized in that the infrared spectroscopy measured by the diffuse reflection method at the measurement intervals of 2cm$^{-1}$ or lower, satisfies predetermined conditions:

$$Ln_xSi_yN_n: Z \qquad (1)$$

(In the general formula (1), Ln represents rare earth element excluding the element to be used as an activator, Z represents an activator, x satisfies the condition of $2.7 \leq x \leq 3.3$, y satisfies the condition of $5.4 \leq y \leq 6.6$, and n satisfies the condition of $10 \leq n \leq 12$.)

Fig. 1

EP 2 781 577 A1

**Description**

TECHNICAL FIELD

This invention relates to a nitride phosphor. More specifically, the invention relates to a phosphor endowed with a luminance, internal quantum efficiency and external quantum efficiency which are all excellent.

BACKGROUND ART

In recent years, the trend toward energy conservation has led to a growth in demand for illumination and backlights that use LEDs. The LEDs used in such applications are white-emitting LEDs composed of phosphors placed on an LED chip that emits light of a blue or near-ultraviolet wavelength. It is common to use, as this type of white-emitting LED, diodes in which yellow-emitting YAG (yttrium aluminum garnet) phosphors that utilize the blue light from a blue LED chip as the excitation light are placed on the blue LED chip.

However, one problem with YAG phosphors is that when used under a high power, there is a large so-called temperature extinction effect whereby raising the temperature of the phosphor lowers the luminance. Another problem has been a dramatic decrease in luminance when excitation with light at about 350 to 420 nm is attempted in order to achieve an even better color reproducibility range and color rendering properties. To resolve these problems, yellow-emitting nitride phosphors have been investigated. As a result, for example, the phosphor described in Patent Document 1 which is made up of $La_3Si_6Ni_{11}$ as the host to which an activator has been added (referred to below as the "LSN phosphor") has been developed as a promising candidate. Compared to conventional YAG phosphors, this phosphor undergoes little decrease in luminance even when the temperature rises, enabling sufficient light emission to be obtained even when excited with near-ultraviolet light. It is thus anticipated that a light-emitting device which achieves both high color rendering properties and a high efficiency can be created by using LEDs which emit light at about 350 to 420 nm in combination with phosphors that are blue, red or the like.

CITATION LIST

PATENT DOCUMENT

Patent Document 1: WO 2008/132954
Patent Document 2: WO 2010/114061

SUMMARY OF INVENTION

TECHNICAL PROBLEM

Compared with conventional YAG phosphors, the LSN phosphor described in Patent Document 1 exhibits little decrease in luminance with a rise in temperature and moreover is able to provide sufficient luminance even when excited by near-ultraviolet light.
However, there exists a desire to obtain in phosphors an even higher luminance with less energy, and so further improvements in luminance, internal quantum efficiency and external quantum efficiency have been awaited. Accordingly, an object of this invention is to provide a nitride phosphor endowed with greater luminance, internal quantum efficiency and external quantum efficiency than conventional products.

SOLUTION TO PROBLEM

The inventors have conducted durability tests in which they exposed LSN phosphors to high temperature and high humidity and checked the percent retention of luminance, discovering as a result that the luminance retention tends to get better when the phosphors are exposed to harsher conditions. Moreover, when the phosphors were treated under high-temperature and high-humidity conditions, the inventors were able to obtain the unanticipated result that the luminance and the internal quantum efficiency both rise about 10%.
The inventors, upon analyzing phosphors in which the luminance and the internal quantum efficiency thus increased, have found that water in a hydrogen-bonded state differing from that of ordinary adsorbed water is present at the surface thereof and appears to have formed some kind of film on the phosphor surface, and have achieved this invention.

The present invention is as follows.

<1> A nitride phosphor of general formula (1) below

$$Ln_xSi_yN_n:Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),
the nitride phosphor having an infrared absorption spectrum, as measured by a diffuse reflectance method at measurement intervals of 2 cm$^{-1}$ or less, that satisfies the following condition:

a) when converting the obtained infrared absorption spectrum into Kubelka-Munk function values, calculating slopes (referred to below as "differential values") between two adjoining measured values among the converted values in the range of 3593 cm$^{-1}$ to 3608 cm$^{-1}$ and determining the average of the differential values in the range of 3593 cm$^{-1}$ to 3608 cm$^{-1}$, and
b) when converting the obtained infrared absorption spectrum into Kubelka-Munk function values and determining a maximum value in the range of 3500 cm$^{-1}$ to 3250 cm$^{-1}$,
c) a value obtained by dividing the average of the differential values from 3593 cm$^{-1}$ to 3608 cm$^{-1}$ by the maximum value in the range of 3500 cm$^{-1}$ to 3250 cm$^{-1}$ is $-2.4 \times 10^{-3}$ or less.

<2> A nitride phosphor of general formula (1) below

$$Ln_xSi_yN_n:Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),
wherein, in thermogravimetry, at least 25% of total adsorbed water that has adsorbed to the nitride phosphor desorbs at between 170°C and 300°C.
<3> The nitride phosphor according to claim 2, wherein at least 30% of the total adsorbed water desorbs at between 170°C and 300°C.
<4> A nitride phosphor of general formula (1) below

$$Ln_xSi_yN_n:Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),
wherein the ratio of a specific surface area determined by a BET method with respect to a specific surface area calculated from an average particle diameter measured by a Coulter counter method is 20 or less.
<5> The nitride phosphor according to any one of <1> to <4>, wherein the nitride phosphor has an internal quantum efficiency of at least 71%.
<6> A method of manufacturing a nitride phosphor of general formula (1) below

$$Ln_xSi_yN_n:Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),
the method comprising the steps of:

preparing a raw material mixture for the nitride phosphor of general formula (1);
firing the raw material mixture; and
vapor heat-treating the fired material obtained in the firing step.

<7> A method of manufacturing a nitride phosphor, comprising the steps of:

coating a rare-earth hydroxide onto a surface of a phosphor; and
vapor heat-treating the nitride phosphor coated with the rare-earth hydroxide.

<8> The method of manufacturing a nitride phosphor according to <7>, wherein the nitride phosphor is a nitride phosphor of general formula (1) below

$$Ln_xSi_yN_n:Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$), or is a phosphor including $\beta$-SiAlON, $\alpha$-SiAlON, $CaAlSiN_3$ or $CaAlSi_4N_7$ as a host.

<9> A nitride phosphor, having an infrared absorption spectrum, as measured by a diffuse reflectance method at measurement intervals of 2 cm$^{-1}$ or less, that satisfies the following condition:

a) when converting the obtained infrared absorption spectrum into Kubelka-Munk function values, calculating slopes (referred to below as "differential values") between two adjoining measured values among the converted values in the range of 3593 cm$^{-1}$ to 3608 cm$^{-1}$ and determining the average of the differential values in the range of 3593 cm$^{-1}$ to 3608 cm$^{-1}$, and

b) when converting the obtained infrared absorption spectrum into Kubelka-Munk function values and determining a maximum value in the range of 3500 cm$^{-1}$ to 3250 cm$^{-1}$,

c) a value obtained by dividing the average of the differential values from 3593 cm$^{-1}$ to 3608 cm$^{-1}$ by the maximum value in the range of 3500 cm$^{-1}$ to 3250 cm$^{-1}$ is $-2.4 \times 10^{-3}$ or less.

<10> A nitride phosphor, wherein, in thermogravimetry, at least 25% of total adsorbed water that has adsorbed to the nitride phosphor desorbs at between 170°C and 300°C.

<11> A nitride phosphor, wherein the ratio of a specific surface area determined by a BET method with respect to a specific surface area calculated from an average particle diameter measured by a Coulter counter method is 20 or less.

<12> The nitride phosphor according to any one of <9> to <11>, wherein the nitride phosphor has an internal quantum efficiency of at least 71%.

<13> The nitride phosphor according to <1>, wherein the ratio of a specific surface area determined by a BET method with respect to a specific surface area calculated from an average particle diameter measured by a Coulter counter method is 20 or less.

<14> The nitride phosphor according to <2> or <3>, wherein the ratio of a specific surface area determined by a BET method with respect to a specific surface area calculated from an average particle diameter measured by a Coulter counter method is 20 or less.

<15> The nitride phosphor according to <9> or <10>, wherein the ratio of a specific surface area determined by a BET method with respect to a specific surface area calculated from an average particle diameter measured by a Coulter counter method is 20 or less.

ADVANTAGEOUS EFFECTS OF INVENTION

By way of this invention, there can be provided nitride phosphors of improved luminance, internal quantum efficiency and external quantum efficiency. There can also be provided a method of manufacturing nitride phosphors of improved luminance and internal quantum efficiency.

BRIEF DESCRIPTION OF THE DRAWINGS

FIG. 1 is a graph which compares the values obtained by converting the infrared absorption spectra of the phosphors in Example 1 of the invention and Comparative Example 1 into Kubelka-Munk function values.

FIG. 2 is a graph which compares the values obtained by converting the infrared absorption spectra of the phosphors in Example 2 of the invention and Comparative Example 2 into Kubelka-Munk function values.

FIG. 3 is a graph which compares the values obtained by converting the infrared absorption spectra of the phosphors in Example 3 of the invention and Comparative Example 3 into Kubelka-Munk function values.

FIG. 4 is a graph which compares the values obtained by converting the infrared absorption spectra of the phosphors in Example 4 of the invention and Comparative Example 4 into Kubelka-Munk function values.

FIG. 5 is a graph which compares the values obtained by converting the infrared absorption spectra of the phosphors in Example 5 of the invention and Comparative Example 5 into Kubelka-Munk function values.

FIG. 6 is a graph which shows the values obtained by converting the infrared absorption spectrum of the phosphor in Example 6 of the invention into Kubelka-Munk function values.

FIG. 7 is a graph which plots the values obtained by converting the infrared absorption spectra of the phosphors in Examples 1 to 6 of the invention and Comparative Examples 1 to 5 into Kubelka-Munk function values, and dividing the differential average values thereof in the range of 3593 $cm^{-1}$ to 3608 $cm^{-1}$ by the maximum values thereof in the range of 3500 $cm^{-1}$ to 3250 $cm^{-1}$.

FIG. 8 is a graph showing the results obtained by measuring the quantity of adsorbed water on the phosphors in Example 1 of the invention and Comparative Example 1 that desorbs in various temperature ranges.

FIG. 9 is a graph that compares the values obtained by converting the infrared absorption spectra of the phosphors in Example 9 of the invention and Comparative Example 9 into Kubelka-Munk function values.

FIG. 10 is a graph that compares the values obtained by converting the infrared absorption spectra of the phosphors in Example 10 of the invention and Comparative Example 10 into Kubelka-Munk function values.

FIG. 11 is a graph that compares the values obtained by converting the infrared absorption spectra of the phosphors in Example 11 of the invention and Comparative Example 11 into Kubelka-Munk function values.

FIG. 12 is a graph that compares the values obtained by converting the infrared absorption spectra of the phosphors in Example 12 of the invention and Comparative Example 12 into Kubelka-Munk function values.

FIG. 13 is a graph that compares the values obtained by converting the infrared absorption spectra of the phosphors in Example 13 of the invention and Comparative Example 13 into Kubelka-Munk function values.

FIG. 14 is a graph which plots the values obtained by converting the infrared absorption spectra of the phosphors in Examples 1 to 6 and 9 to 13 of the invention and Comparative Examples 1 to 5 and 9 to 13 into Kubelka-Munk function values, and dividing the differential average values thereof in the range of 3593 $cm^{-1}$ to 3608 $cm^{-1}$ by the maximum values thereof in the range of 3500 $cm^{-1}$ to 3250 $cm^{-1}$.

FIG. 15 is a graph showing the results obtained by measuring the quantity of adsorbed water on the phosphors in Example 9 of the invention and Comparative Example 9 that desorbs in various temperature ranges.

FIG. 16 is a graph showing the results obtained by measuring the quantity of adsorbed water on the phosphors in Example 10 of the invention and Comparative Example 10 that desorbs in various temperature ranges.

FIG. 17 is a graph showing the results obtained by measuring the quantity of adsorbed water on the phosphors in Example 11 of the invention and Comparative Example 11 that desorbs in various temperature ranges.

FIG. 18 is a graph showing the results obtained by measuring the quantity of adsorbed water on the phosphors in Example 12 of the invention and Comparative Example 12 that desorbs in various temperature ranges.

FIG. 19 is a graph showing the results obtained by measuring the quantity of adsorbed water on the phosphors in Example 13 of the invention and Comparative Example 13 that desorbs in various temperature ranges.

MODES FOR CARRYING OUT THE INVENTION

The present invention will be explained with reference to embodiments and examples, but the present invention is not limited to the following embodiments and examples, and may be carried out in various ways without departing from the gist of the present invention.

(Surface State of Phosphor, and Method of Distinguishing the Surface State)

The inventive phosphor is characterized by the presence, on the surface of a nitride phosphor, and preferably on the surface of a phosphor of the subsequently described general formula (1), of a special adsorbed water that is predicted to have, unlike ordinary water, multiple types of hydrogen bonds. Because this adsorbed water does not evaporate in the normal temperature range, and instead begins to desorb from the phosphor surface when the phosphor is exposed to elevated temperatures of at least 170°C that greatly exceed the normal temperature for water evaporation of 100°C, this adsorbed water does not vanish under ordinary conditions of phosphor use.

Due to the presence of this adsorbed water, the luminance and interior quantum efficiency of the phosphor increase. The inventors surmise the reason for such increases in the luminance and interior quantum efficiency of the phosphor to be that, with the presence of adsorbed water, a thin layer of water having a lower refractive index than the phosphor forms on the phosphor surface, leading to an increase in the light extraction ratio from the phosphor interior.

This thin layer of water itself characterizes the phosphor of the invention. It is a first aspect of the invention to have differentiated between this thin layer of special water and a layer of ordinary water using infrared absorption spectra.

The thin layer of water formed on the phosphor surface can be distinguished from the spectrum obtained by carrying out infrared absorption spectroscopy by the diffuse reflectance method. Specifically, the presence or absence of a thin layer of water on the phosphor can be determined by the characteristics of having a broad peak in the range of 3250 $cm^{-1}$ to 3500 $cm^{-1}$ indicative of the formation of hydrogen bonds, and of exhibiting the rise of a sharp peak particularly near 3600 $cm^{-1}$.

The presence of the thin layer of water characterizing the inventive phosphor can be confirmed by the following method.

First, infrared absorption spectroscopy by the diffuse reflectance method is carried out. It is critical for the measurement intervals at this time to be set to 2 cm$^{-1}$ or less. At measurement intervals wider than 2 cm$^{-1}$, the precision will be inadequate for confirming the presence of the thin layer of special water of the invention. Hence, it is critical that such spectroscopy be carried out at measurement intervals of 2 cm$^{-1}$ or less.

Compared with the spectrum obtained by transmission spectroscopy, the spectrum obtained by the diffuse reflectance measurement of a powder provides data that accentuates the peak intensities of weak absorption bands. Therefore, when carrying out quantitative comparisons, it is common to convert the diffusion reflectance spectrum results with the Kubelka-Munk function to values (Kubelka-Munk function values) that can be compared with a transmission spectrum (see, for example, paragraph [0101] of Japanese Patent Application Laid-open No. 2010-214289).

In these measured values, ordinary water appears as a peak at about 3300 cm$^{-1}$. In the case of the inventive phosphor, unlike the peak that arises due to the presence of ordinary water, a broad peak appears over a range of 3250 cm$^{-1}$ to 3500 cm$^{-1}$ as a peak in which the vicinity of the peak apex has a flat shape as if the top of an ordinary peak had been squashed. A peak having a flat top indicates that waters having multiple types of hydrogen bonds in this peak range are all present in about equal amounts, which may be regarded as a state considerably different from the state in which ordinary water is present.

However, in infrared absorption spectroscopy by the diffuse reflectance method, given that peak intensity differs depending on the particle size of the powder being measured and the packing fraction of the powder layer during measurement, because the peak, even where one does not actually exist, becomes flat, it is difficult to use the condition of the peak being flat as a definition of the infrared absorption spectrum of the phosphor.

Hence, making use of the fact that there arises, as the characteristic shape of the infrared absorption spectrum of the inventive phosphor having a shape like that of an ordinary peak shape that has been squashed, a steeply sloped portion just before the flat peak, whether or not a phosphor is the inventive phosphor is determined by the following steps.

In the practice of this invention, whether a phosphor is the inventive phosphor is determined by the following steps.

First, in this invention, the infrared absorption spectrum of the phosphor is measured by the diffuse reflectance method. As noted above, the measurement conditions include setting the measurement intervals to 2 cm$^{-1}$ or less. For measurement at a sufficient precision, it is necessary to set the measurement intervals to, at a minimum, 2 cm$^{-1}$ or less.

The apparatus used to measure the infrared absorption spectrum of the phosphor is not subject to any particular limitation, provided it is one based on the principles of the diffusion reflectance method. For example, an AVATOR 360 spectrometer (Nicolet) may be used. Conversion to Kubelka-Munk function values can be carried out using conversion software that is generally installed in the spectrometer.

Next, a) when converting the obtained infrared absorption spectrum into Kubelka-Munk function values, calculating slopes (referred to below as "differential values") between two adjoining measured values among the converted values in the range of 3593 cm$^{-1}$ to 3608 cm$^{-1}$ and determining the average of the differential values in the range of 3593 cm$^{-1}$ to 3608 cm$^{-1}$, and b) when converting the obtained infrared absorption spectrum into Kubelka-Munk function values and determining the maximum value in the range of 3500 cm$^{-1}$ to 3250 cm$^{-1}$, c) the value obtained by dividing the average of the differential values from 3593 cm$^{-1}$ to 3608 cm$^{-1}$ by the maximum value in the range of 3500 cm$^{-1}$ to 3250 cm$^{-1}$ is confirmed to be -2.4 $\times$ 10$^{-3}$ or less.

Above Step (a) calculates, for Kubelka-Munk function values converted from an infrared absorption spectrum obtained by the diffuse reflectance method, the slopes (referred to below as "differential values") between two adjoining measured values in the range of 3593 cm$^{-1}$ to 3608 cm$^{-1}$. The range of 3593 cm$^{-1}$ to 3608 cm$^{-1}$ is a portion of the spectrum corresponding to the rise, or edge, of the peak just before the peak for the multiple types of hydrogen bonds, and this slope (differential value) refers to the slope of the rise in the peak for multiple types of hydrogen bonds. The reason for determining the average of differential values between two adjoining measured values in a given range, i.e., 3593 cm$^{-1}$ to 3608 cm$^{-1}$, is to avoid not having the characteristics of this invention be accurately expressed. That is, in cases where a specific numerical value, such as the slope at 3600 cm$^{-1}$, is used or where the slope between 3593 cm$^{-1}$ and 3608 cm$^{-1}$ is calculated, owing to the influence of the degree of instability in measurement, the shape of the actual peak may fail to be represented.

Above Step (b) determines the maximum value in the range of 3500 cm$^{-1}$ to 3250 cm$^{-1}$ for the Kubelka-Munk function values obtained by such measurement. As noted above, the range of 3500 cm$^{-1}$ to 3250 cm$^{-1}$ indicates the range of the flat peak. Step (b) computes the maximum value in the range of this peak.

Step (c) computes a value by dividing the average of the differential values obtained in Step (a) by the maximum value obtained in Step (b). In cases where, as in the phosphor of this invention, there exist multiple types of hydrogen bonds, the peak intensity of the infrared absorption spectrum differs according to the measurement conditions; if the peak intensity is low, the average of the differential values becomes small. Hence, by dividing the average of the differential values by the maximum peak intensity and normalizing the result, suitable evaluation was enabled even when, in measurement of the infrared absorption spectrum, the overall measurement intensity level was low or was too high. The step for doing this is (c), and the numerical value of the criterion for deciding whether a phosphor is the phosphor of the invention, that is, the value obtained by dividing the average differential value by the maximum peak intensity, is -2.4 $\times$ $10^{-3}$ or less.

The lower limit in the numerical value of the above criterion is generally thought to not fall below -9 $\times$ $10^{-3}$, although it will be readily understood by a person skilled in the art that this is not inherently limited by the invention.

The above value is satisfied by the presence at the phosphor surface of the multiple types of hydrogen bonds which characterize the inventive phosphors. The method of manufacturing such phosphors will be subsequently described.

In a second aspect of the invention, this thin layer of special water and a layer of ordinary water are differentiated by the temperature at which the adsorbed water desorbs.

(Desorption Temperature of Adsorbed Water)

The inventive phosphor is a nitride phosphor, and is preferably a nitride phosphor of subsequently described general formula (1) wherein, in thermogravimetry, at least 25% of the total adsorbed water that has adsorbed to the phosphor desorbs at between 170°C and 300°C. Preferably at least 30%, and more preferably at least 35%, of the total adsorbed water that has adsorbed to the phosphor desorbs at between 170°C and 300°C. As explained above, the adsorbed water present on the surface of the inventive phosphor does not evaporate much at the normal water evaporation temperature of 100°C, but readily desorbs from the phosphor surface when exposed to elevated temperatures of at least 170°C. Accordingly, the copious adsorbed water that desorbs at between 170°C and 300°C in thermogravimetry is a characteristic of this invention, and the fact that at least 25%, and preferably at least 30%, of the total adsorbed water that has adsorbed to the phosphor desorbs at between 170°C and 300°C characterizes the invention.

In the above-mentioned thermogravimetry, of the emitted gases analyzed in thermal programmed desorption (TPD), that portion having a molecular weight of 18 is regarded as adsorbed water. Measurement is carried out over the range of room temperature to 1000°C, and the quantity of gas having a molecular weight of 18 that has been emitted in the range up to 1000°C is regarded as the total quantity of adsorbed water. The temperature rise rate is set to 33°C/min. By dividing the quantity of gas having a molecular weight of 18 emitted at between 170°C and 300°C by the quantity of gas having a molecular weight of 18 emitted at between room temperature and 1000°C, it is possible to determine the ratio of the invention. Because the units of the measured values are the same, this ratio (%) is dimensionless.

In ordinary thermogravimetry, measurement is often carried out using an apparatus such as a TG-DTA. However, in TG, it is difficult to know what substance desorbs from the phosphor, in addition to which there is a weight gain due to oxidation at the surface of the nitride phosphor. For these reasons, it is necessary in this invention to use TPD and measure the quantity of gas having a molecular weight of 18.

As described above, because most water on a surface normally evaporates at a temperature lower than 170°C, in cases where a thin layer of special water has not formed as in this invention, the quantity of water that desorbs from 170°C to 300°C is unlikely to exceed 25%, and certainly does not exceed 30%. Accordingly, it is possible to check for the presence of multiple types of hydrogen bonds on the phosphor surface that characterizes this invention. Thermogravimetry may be carried out by, for example, analyzing the adsorbed gases using a gas analyzer for phosphor analysis (ANELVA) or the like.

Given that the multiple types of hydrogen bonds characteristic of the inventive phosphor are present on the phosphor surface, the above-indicated amount of desorption of adsorbed water is satisfied. The method of manufacturing such phosphors will be described later.

Turning now to a third aspect of the invention, numerous microscopic irregularities are normally present on the surface of a phosphor. Owing to the presence of this thin layer of special water, surface irregularities are buried to a level that is substantially impossible with an ordinary coat, making the phosphor surface smooth. A phosphor according to the third aspect of the invention is differentiated by the fact that the difference between the specific surface area determined by the BET method and the specific surface area computed from the average particle diameter measured by the Coulter counter method becomes a very small value that cannot be obtained by other methods.

(Surface Area)

The inventive phosphor is a nitride phosphor, and is preferably a nitride phosphor of the subsequently described general formula (1) wherein the ratio of the specific surface area determined by the BET method with respect to the specific surface area calculated from the average particle diameter measured by the Coulter counter method is 20 or less.

Phosphors, such as the phosphors of the subsequently described general formula (1), generally have a large difference between both above specific surface area values. However, in the phosphor of this aspect of the invention, the ratio between these two specific surface areas is a small value of 20 or less. This is presumably because the special adsorbed water of this invention covers most of the phosphor surface, resulting in the burial of nitrogen adsorption sites and, in turn, a decrease in the amount of nitrogen adsorption at the time of BET measurement, ultimately yielding such a small ratio.

The average particle diameter determined by the Coulter counter method is the volume median diameter, and the surface area determined from this average particle diameter is given by the following formula.

[Formula 1]

$$S_m = \frac{3}{\rho \times \dfrac{D}{2}}$$

where $S_m$: specific surface area per unit mass
$\rho$: particle density
$D$: particle diameter

The specific surface area calculated with this formula is determined based on the assumption that the surface of the phosphor is a smooth spherical surface free of irregularities, whereas the specific surface area determined by the BET method is a value reflecting actual irregularities that has been determined from the amount of nitrogen adsorption onto the particle surface.

Measurement of the average particle diameter by the Coulter counter method may be carried out using, for example, a Coulter counter particle size analyzer.

The presence on the phosphor surface of the multiple types of hydrogen bonds characteristic of the phosphor according to this aspect of the invention serves to satisfy the above specific surface area ratio. The method of manufacture thereof will be subsequently described.

The following applies to all the phosphors according to the first to third aspects of the invention.

(Internal Quantum Efficiency)

It is preferable for the phosphors of the invention to have an internal quantum efficiency of at least 71%.

The internal quantum efficiency is explained in, for example, paragraphs [0068] to [0083] of Patent Document 1. The internal quantum efficiency is generally determined by the following formula.

Internal quantum efficiency (%) = (Number of photons emitted by phosphor)/ (Number of photons absorbed by phosphor)

The internal quantum efficiency is a value that incorporates the ease of extracting light from the phosphor. When there is a thin layer of special water on the surface of the phosphor as in the inventive phosphor, the light extraction efficiency increases, as a result of which the value of the internal quantum efficiency also appears to improve. Hence, it is preferable for the internal quantum efficiency of the inventive phosphor to be a high value, and especially 71% or more.

The number of photons used in measurement of the internal quantum efficiency can be measured using a spectrometer such as the MCPD 2000 or the MCPD 7000 manufactured by Otsuka Electronics Co., Ltd.

The presence on the phosphor surface of the multiple types of hydrogen bonds characteristic of the inventive phosphor enables the above specific surface area ratio to be satisfied. The method of manufacturing such phosphors will be subsequently described.

(Types of phosphor)

The phosphors used in this invention are nitride phosphors, and most preferably are phosphors having a basic structure of general formula (1) below.

$$Ln_x Si_y N_n : Z \qquad (1)$$

In general formula (1), Ln is a rare-earth element exclusive of the element used as the activator, Z is an activator, x satisfies $2.7 \le x \le 3.3$, y satisfies $5.4 \le y \le 6.6$, and n satisfies $10 \le n \le 12$.

The aforementioned Ln is preferably a rare-earth element containing 80 mol% or more of La, more preferably a rare-earth element containing 95 mol% or more of La, and even more preferably La.

It is presumed that elements other than the La included in Ln may be used without difficulty, provided they are rare-earth elements. Preferred elements include yttrium, gadolinium and the like which are commonly substituted in other phosphors as well. These elements are desirable because they have ionic radii close to that of La and the charge is uniform.

The activator Z preferably includes europium (Eu) and cerium (Ce), more preferably includes at least 80 mol% of Ce, even more preferably includes at least 95 mol%, and is most preferably Ce.

The molar ratio of the elements, i.e., the ratio of x, y and z denoting the stoichiometric composition, is 3:6:11. Because use as a phosphor is possible even with an excess or insufficiency therein of about 10%, the values for x, y and z are set in the respective ranges of $2.7 \leq x \leq 3.3$, $5.4 \leq y \leq 6.6$, and $10 \leq z \leq 12$.

The inventive phosphors are nitride phosphors, and preferably ones having the above-described general formula (1), although phosphors in which a portion of the sites have been substituted with alkaline earth metal elements such as calcium or strontium, or with aluminum or the like for such purposes as to change the chromaticity point are not excluded from the range of the invention. For example, it is possible to advantageously mention here substitution with calcium, yttrium, gadolinium or strontium, which may be used when lengthening the emission wavelength. These elements are sometimes substituted at the same time with other elements in order to satisfy the principle of conservation of charge. As a result, some of the Si and N sites are sometimes substituted with oxygen or the like. Phosphors such as these may also be advantageously used.

Because nitride phosphors have a high refractive index compared with other phosphors, by forming the special water film explained above in connection with the first to third aspects of the invention, similar effects are not limited to phosphors of general formula (1) and can probably be obtained in other nitride phosphors as well. Examples of such nitride phosphors include phosphors containing $\beta$-SiAlON, $\alpha$-SiAlON, $CaAlSiN_3$, $CaAlSi_4N_7$ or $Sr_2Si_5N_8$ as the host. Of course, the effects of the invention can probably be obtained even when a portion of these elements is substituted with another element such as oxygen, or a portion is substituted with another element for charge compensation. In cases where the special water film of the invention is provided on the surface of these phosphors, it is preferable to carry out coating or surface treatment such as to increase the number of hydroxyl groups on the surface.

(Particle size of phosphor)

The phosphors of the invention have a volume median diameter that is generally at least 0.1 $\mu$m, and preferably at least 0.5 $\mu$m, and is generally not more than 35 $\mu$m, and preferably not more than 25 $\mu$m. If the volume median diameter is too small, the luminance decreases and the phosphor particles have a tendency to agglomerate. On the other hand, if the volume median diameter is too large, non-uniform coating and the clogging of equipment such as dispensers has a tendency to arise. Hence, a volume median diameter within the above range is preferred. The volume median diameter can be measured by, for example, the above-described Coulter counter method. A typical apparatus that may be used to carry out measurement includes, for example, the Multisizer (Beckman Coulter).

(Method of producing phosphor)

To further illustrate the invention, examples of methods for manufacturing phosphors of general formula (1) are described below.

(Raw Materials)

In a final posttreatment in the phosphor production step, the inventive phosphor is subjected to heat treatment so as to form a thin water layer having multiple types of hydrogen bonds on the phosphor surface. Aside from this, production may be carried out by a known production method, such as that described in Patent Document 1 or that described in Patent Document 2.

For example, it can be produced by mixing phosphor precursors as appropriate, which were prepared as the raw materials, and firing the mixed phosphor precursors (firing step).

Of these production methods, production is carried out by preferably a method in which an alloy is used as at least some portion of the raw materials, and more preferably a method having a step in which an alloy containing at least an Ln element, a Z element and the Si element in above formula (1) (sometimes referred to below as a "phosphor-producing alloy") is fired in the presence of a flux. The phosphors of the invention can be produced using some or all of such a raw material as a phosphor-producing alloy. Patent Document 2 describes in detail methods for producing such starting alloys, and provides detailed descriptions of methods capable of utilizing, where necessary, such operations as the production, size reduction and classification of starting alloys.

Of the above production methods, the firing step is preferably carried out in a hydrogen-containing nitrogen gas atmosphere. Moreover, after firing, it is preferable to wash the fired product with an acidic aqueous solution.

By using these methods in combination as needed, phosphors of general formula (1) can be advantageously prepared.

(Mixing of material)

When compositions of metal elements contained in an alloy for producing a phosphor coincides with the composition of the metal elements contained in the crystal phase represented by the above formula (1), only the alloy for producing a phosphor may be fired. When an alloy for producing a phosphor is not used or the compositions are different, an alloy for producing a phosphor having a different composition, elemental metal, or metal compound can be mixed with the alloy for producing a phosphor so that the composition of the metal elements contained in the material coincides with the composition of the metal elements contained in the crystal phase represented by the formula (1). Firing is then performed.

However, at this time, in cases where the phosphor to be produced tends to form an impurity phase, specific elements may be included in large proportions so as to discourage the formation of such an impurity phase. By way of illustration, in the case of $La_3Si_6N_{11}$:Ce, which is a typical phosphor of general formula (1) according to the invention, to suppress the formation of the similar composition $LaSi_3N_5$:Ce, a somewhat large amount of La is added.

There is no limitation on metal compounds that are used for other than an alloy for producing a phosphor, and, for example, the metal compound may be exemplified by nitrides, oxides, hydroxides, carbonates, nitrates, sulfates, oxalates, carboxylates, halides, etc. Of these metal compounds, a suitable one can be selected, in light of reactivity with the target compound or the level of $NO_x$, $SO_x$, or the like generated at the time of firing. It is preferable to use a nitride and/or an oxynitride as the phosphor of the present invention is a nitrogen-containing phosphor. In particular, a nitride is preferably used in order to function as a nitrogen source as well.

Examples of the nitride and oxynitride include: nitrides of elements constituting the phosphor such as LaN, $Si_3N_4$ and CeN; and complex nitrides of elements constituting the phosphor such as $La_3Si_4N_{11}$ and $LaSi_3N_5$.

The abovementioned nitrides may contain a small amount of oxygen. There is no special limitation on the ratio (molar ratio) of oxygen/(oxygen + nitrogen) in the nitride, insofar as the phosphor of the present invention can be produced. When oxygen derived from absorbed moisture is not included, the ratio is usually 5% or smaller, preferably 1% or smaller, more preferably 0.5% or smaller, still more preferably 0.3% or smaller, particularly preferably 0.2% or smaller. In a case where the ratio of oxygen is too large, the degree of brightness may decrease.

(Firing step)

By firing and nitriding the resulting raw material in the presence of a flux, the host of the inventive phosphor can be obtained. As subsequently described, firing here is preferably carried out in a hydrogen-containing nitrogen gas atmosphere.

(Flux)

In the firing process, flux is preferably added to the reaction system in order to secure growth of good quality crystals.

The type of flux is not particularly limited and includes, for example, ammonium halides such as $NH_4Cl$ and $NH_4F \cdot HF$; alkali metal carbonates such as $NaCO_3$ and $LiCO_3$; alkali metal halides such as LiCl, NaCl, KCl, CsCl, LiF, NaF, KF and CsF; alkaline earth metal halides such as $CaCl_2$, $BaCl_2$, $SrCl_2$, $CaF_2$, $BaF_2$, $SrF_2$, $MgCl_2$ and $MgF_2$; alkaline earth metal oxides such as BaO; boron oxide, boric acid and borate compounds of alkali metals or alkaline earth metals such as $B_2O_3$, $H_3BO_3$ and $Na_2B_4O_7$; phosphate compounds such as $Li_3PO_4$ and $NH_4H_2PO_4$; aluminum halides such as $AlF_3$; zinc compounds such as zinc halides (e.g., $ZnCl_2$, $ZnF_2$) and zinc oxides; Periodic Table group 15 element compounds such as $Bi_2O_3$; and nitrides of alkali metals, alkaline earth metals or Periodic Table group 13 elements, such as $Li_3N$, $Ca_3N_2$, $Sr_3N_2$, $Ba_3N_2$ and BN.

Other examples of the flux include: halides of rare-earth elements such as $LaF_3$, $LaCl_3$, $GdF_3$, $GdCl_3$, $LuF_3$, $LuCl_3$, $YF_3$, $YCl_3$, $ScF_3$, and $ScCl_3$; and oxides of rare-earth elements such as $La_2O_3$, $Gd_2O_3$, $Lu_2O_3$, $Y_2O_3$, and $Sc_2O_3$.

The above flux is preferably halides, and specific examples are preferably alkali metal halides, alkaline-earth metal halides, Zn halides, and rare-earth element halides. Of the halides, fluoride and chloride are preferred.

For the above-mentioned fluxes with deliquescence, it is preferable to use their anhydrides. In addition, these fluxes can be used either as a single one or as a mixture of two or more kinds in any combination and in any ratio.

More preferred fluxes include $MgF_2$. In addition, preferred use can also be made of, for example, $CeF_3$, $LaF_3$, $YF_3$ and $GdF_3$. Of these, $YF_3$, $GdF_3$ and the like have the effect of changing the chromaticity coordinates (x, y) of the emission color.

Using cesium carbonate and/or cesium nitrate is also preferred.

In cases where a rubidium-containing flux is used, phosphors having a better luminance than with the use of conventionally known fluxes such as magnesium fluoride can be obtained.

The reason is that although magnesium fluoride has an outstanding action as a flux, it is not without its side effects. The magnesium ions included in magnesium fluoride are ions having a smaller ionic radius than the lanthanum ions making up the host, and thus have a tendency to substitute for La in the LSN or to infiltrate the crystal lattice and remain behind as impurities, which lowers the strain and crystallinity of the crystal lattice and becomes a cause of nonluminescent radiation, lowering the luminance of the phosphor. On the other hand, in a rubidium-containing flux, the rubidium ions have a very large ionic radius (compared with the Shannon ionic radius of hexacoordinate $La^{3+}$ of 117 pm, $Rb^+$ has an ionic radius of 166 pm), making it possible to substantially eliminate this side effect of lower luminance due to the entry of such ions into the crystal. This is clearly demonstrated by the fact that, even with elemental analysis in which the LSN phosphors are dissolved after thorough washing of the phosphors, substantially no rubidium is detected from LSN phosphors obtained by firing with the use of a Rb-containing flux. One conceivable factor is that because rubidium compounds have relatively low melting points, their action as a flux can be obtained from a low temperature.

The amount of flux used differs depending on the kind of the materials or compounds used as the flux and is arbitrary. A suitable amount is in the range of usually 0.01 weight % or more, preferably 0.1 weight % or more, more preferably 0.3 weight % or more, and usually 20 weight % or less, preferably 10 weight % or less, relative to the entire raw materials. When the amount of the flux used is too small, the effect of flux may not be exhibited. When the amount of the flux used is too large, the effect of flux may be saturated, or it may be taken up into the host crystals, leading possibly to change in the luminescent color, decrease in the brightness, and deterioration of the firing furnace.

(Firing Conditions)

The raw material mixture is generally charged into a vessel such as a crucible or a tray, and is placed in a heating furnace capable of atmospheric control. At this time, the container material is preferably one having a low reactivity with metal compounds, such as boron nitride, silicon nitride, carbon, aluminum nitride, molybdenum or tungsten. Of these, molybdenum and boron nitride are preferred because of their excellent corrosion resistance. The above material may be of a single type used alone, or two or more types may be used in any combination and proportions. The shape of the firing vessel to be used is optional. For example, its bottom may be circular or oval with no angles, or may be of polygonal shape such as triangular or quadrangular. No particular limitation is imposed on the height of the firing vessel, either, insofar as it can be accommodated in a heating furnace. It can be high or low. Among these, the shape having good heat dissipation properties is preferred.

By firing the raw material mixture, a fired nitride phosphor can be obtained. The above raw material mixture is preferably fired while held at a volume packing ratio of 40% or less. The volume packing fraction (%) can be determined as (bulk density of mixture powder)/(theoretical density of mixed powder) $\times$ 100.

The firing vessel filled with a raw material mixture of this phosphor is held in a firing instrument (hereinafter may be referred to as "furnace"). There is no special limitation on the firing instrument, insofar as the advantageous effect of the present invention is not impaired. However, it is preferable to use an instrument which permits easy control of an atmosphere in the instrument and easy control of pressure. For example, a hot isostatic pressing device (HIP), a resistance heating vacuum pressurized atmosphere heat treatment furnace or the like is preferred.

It is also preferable that a gas containing nitrogen is allowed to pass through the firing instrument before initiation of heating to replace a gas in the system sufficiently with the nitrogen-containing gas. The nitrogen-containing gas may be allowed to pass if necessary after the system is evacuated.

The nitrogen-containing gas used during nitriding treatment is a gas containing the element nitrogen, such as nitrogen, ammonia or a mixed gas of nitrogen and hydrogen. The nitrogen-containing gas may be of a single type used alone, or may be of two or more types used in any combination and proportions. Of these a nitrogen gas that contains hydrogen (a hydrogen-containing nitrogen gas) is preferred as the nitrogen-containing gas. A mixing ratio of hydrogen in the hydrogen-containing nitrogen gas of 4 vol% or less falls outside the explosion range and is preferred from the standpoint of safety.

Nitriding treatment is carried out by heating the phosphor raw materials in a system that is charged with a hydrogen-containing nitrogen gas or through which a hydrogen-containing nitrogen gas is passed. The pressure at this time may be a somewhat depressurized state relative to atmospheric pressure, atmospheric pressure or a pressurized state. To prevent the inadvertent admixture of atmospheric oxygen, it is preferable to set the pressure to at least atmospheric pressure. If the sealability of the heating furnace is poor, setting the pressure to less than atmospheric pressure may lead to the admixture of a large amount of oxygen and hence the possibility that phosphors endowed with high characteristics cannot be obtained. It is preferable for the hydrogen-containing nitrogen gas to have a gauge pressure of at least 0.1 MPa. Alternatively, heating may be carried out under an elevated pressure of at least 20 MPa. A pressure of 200 MPa or less is preferred.

Nitrogen-containing gas is then passed through the system so as to thoroughly flush the interior of the system. If necessary, gas may be passed through after first evacuated the interior of the system. Conditions for this nitriding treatment, such as the rate of temperature rise during the nitriding reaction, the initial nitriding method, the firing temperature and the holding time, are carefully described in, for example, the above-mentioned Patent Document 1 and Patent Document 2, and so production may be carried out based on these descriptions.

(Post treatment step)

Steps other than described above can be carried out in the production method according to the present invention if necessary. For example, a pulverization step, washing step, classification step, surface treatment step, drying step or the like can be carried out if necessary after the above-mentioned firing step.

(Pulverization step)

Pulverizing can be done using, for example, a pulverizers such as a hammer mill, a roll mill, a ball mill, a jet mill, a ribbon blender, a V-type blender, a Henschel mixer, or using a mortar and a pestle. For the sake of, for example, crushing the secondary particles while preventing destruction of the phosphor crystals generated, it is preferable to perform a ball milling using, for example, a container made of alumina, silicon nitride, $ZrO_2$, glass or the like and balls made of the same material as the container, iron-core urethane, or the like in the container for on the order of 10 minutes to 24 hours. In such a case, 0.05 mass% to 2 mass% of a dispersant such as alkali phosphate salts such as an organic acid and a hexametaphosphate acid may be used.

(Washing step)

Washing of a phosphor surface can be done using, for example, water such as deionized water, organic solvent such as ethanol, or alkaline aqueous solution such as ammonia water.
Acidic aqueous solutions containing inorganic acids such as hydrochloric acid, nitric acid, sulfuric acid, aqua regia, or a mixture of hydrofluoric acid and sulfuric acid; and organic acids such as acetic acid may be used, for example, for the purpose of removing an impurity phase, such as the flux used, attached to the phosphor surface and improving the luminescent characteristics.
An acidic aqueous solution containing hydrofluoric acid, ammonium fluoride ($NH_4F$), ammonium hydrogen fluoride ($NH_4HF_2$), sodium hydrogen fluoride, potassium hydrogen fluoride and the like may be used for the purpose of removing the noncrystalline content that is an impurities phase. Of these, an aqueous solution of $NH_4HF_2$ is preferred. The concentration of the aqueous solution of $NH_4HF_2$ is generally from 1 wt% to 30 wt%, and preferably from 5 wt% to 25 wt%. If necessary, these chemicals may be suitably mixed and used. Where necessary, temperature control of these acidic aqueous solutions is preferred.
It is preferable that, after washing with an alkaline aqueous solution or an acidic aqueous solution, an additional washing with water is carried out.
The luminance, emission intensity, absorption efficiency, and object color of the phosphor can be improved by the above-described washing step.
To cite one illustrative example of a washing step, the fired product, after being washed, is agitated for 1 hour in a 10-fold amount of a 10 wt% $NH_4HF_2$ aqueous solution, then dispersed in water and left to stand for 1 hour, after which it is preferable to wash the resulting supernatant until the pH thereof becomes approximately neutral (about pH 5 to 9). This is done because, if the supernatant is either basic or acidic, there is a possibility that, when mixed with the subsequently described liquid medium or the like, it will exert an adverse effect on the liquid medium.
A method of washing with a first type of liquid then washing with a second type of liquid, or a method of washing with a liquid obtained by mixing together two or more types of substances is preferred for removing impurities that arise during acid washing. The former is exemplified by the steps of washing with an aqueous solution of $NH_4HF_2$, then washing in hydrochloric acid, and finally rinsing with water. The latter is exemplified by the steps of washing with a mixed aqueous solution of $NH_4HF_2$ and $HNO_3$, then rinsing with water.
The degree of the washing may be represented in the electric conductivity of the supernatant that can be obtained after one hour settling period after dispersion in water 10 times by weight of the phosphor after the washing. The lower the electric conductivity is, the more preferable, from the standpoint of higher luminescent characteristics. However, also in consideration of the productivity, it is preferable to repeat the washing treatments until the electric conductivity is usually 10 mS/m or lower, preferably 5 mS/m or lower, more preferably 4 mS/m or lower, and still more preferably 0.5 mS/m or lower.
The electric conductivity is measured as follows. The phosphor particles, which have larger specific gravity than water, are allowed to precipitate spontaneously, by leaving them to stand for 1 hour after they are stirred for dispersion in water which is 10 times as heavy as the phosphor for a predetermined period of time, for example, 10 minutes. The electric conductivity of the supernatant fluid at that time may be, for example, measured using a conductance meter, "EC METER CM-30G", manufactured by DKK-TOA CORPORATION or the like. Although there is no particular limitation on water used for the washing treatment or the measurement of the electric conductivity, demineralized water or distilled water is preferred. Among them, water with low electric conductivity is particularly preferred. It is preferable to use water of which the electric conductivity is usually 0.0064 mS/m or higher, usually 1 mS/m or lower, and preferably 0.5 mS/m or lower. The electric conductivity is usually measured at a room temperature (around 25°C).

(Classification step)

Classification treatment can be done by, for example, levigation, or using various classifiers such as air current classifier or vibrating sieve. Particularly, a dry classification using a nylon mesh can be preferably used to obtain the phosphor of good dispersibility with volume mean system of about 10 $\mu$m.

In addition, combination of a dry classification using nylon mesh and elutriation treatment can obtain the phosphor of good dispersibility with volume-average median diameter of about 20 $\mu$m.

In a levigation or elutriation treatment, phosphor particles is dispersed in an aqueous medium at a concentration of around 0.1 weight % to 10 weight %. Further, the pH of the aqueous medium is set at usually 4 or larger, preferably 5 or larger, and usually 9 or smaller, preferably 8 or smaller in order to prevent the degradation of the phosphor. In addition, for achieving the phosphor with volume-average median diameter such as described above by a levigation or elutriation treatment, it is preferable to perform two-step sieving in which, for example, particles of 50 $\mu$m or smaller are sifted out and then particles of 30 $\mu$m or smaller are sifted out, in terms of balance between the operating efficiency and the yield. The lower limit of the particle size for performing the sieving process is usually 1 $\mu$m or larger, and preferably 5 $\mu$m or larger.

(Drying Step)

After such washing has been completed, the phosphors are dried at about 100°C to 200°C. If necessary, dispersion treatment (e.g., passing through a mesh) may be carried to a degree that prevents agglomeration on drying.

(Vapor Heat Treatment Step)

The phosphors of the invention, as noted above, are characterized by the presence of special adsorbed water on the phosphor surface. Phosphors having such special adsorbed water present thereon can be obtained by vapor heat treatment in which the phosphors produced in the foregoing steps are left to stand in the presence of a vapor, and preferably in the presence of water vapor.

When inducing the presence of adsorbed water on the phosphor surfaces by placing the phosphors in the presence of a vapor, the temperature is generally at least 50°C, preferably at least 80°C, and more preferably at least 100°C, and is generally 400°C or less, preferably 300°C or less, and more preferably 200°C or less. If the temperature is too low, the desirable effects owing to the presence of adsorbed water at the phosphor surfaces tend to be difficult to obtain, whereas if the temperature is too high, the surfaces of the phosphor particles sometimes become rough.

When inducing the presence of adsorbed water on the phosphor surfaces by placing the phosphors in the presence of a vapor, the humidity (relative humidity) is generally at least 50%, preferably at least 80%, and most preferably 100%. If the humidity is too low, the desirable effects owing to the presence of adsorbed water at the phosphor surfaces tend to be difficult to obtain. So long as the desirable effects of adsorbed water layer formation can be obtained, an aqueous phase may also be present together with the vapor phase having a humidity of 100%.

When inducing the presence of adsorbed water on the phosphor surfaces by placing the phosphors in the presence of a vapor, the pressure is generally at least atmospheric pressure, preferably at least 0.12 MPa, and more preferably at least 0.3 MPa, and is generally 10 MPa or less, preferably 1 MPa or less, and more preferably 0.5 MPa or less. If the pressure is too low, the desirable effects owing to the presence of adsorbed water at the phosphor surfaces tend to be difficult to obtain, whereas if the pressure is too high, a large-scale treatment apparatus is required and problems sometimes arise with the safety of the operation.

When inducing the presence of adsorbed water on the phosphor surfaces by placing the phosphors in the presence of a vapor, the time that the phosphors are held in the presence of this vapor is not uniform and varies according to the above temperature, humidity and pressure, although generally the higher the temperature, humidity and pressure, the shorter the holding time that will suffice. More specifically, the holding time is generally at least 0.5 hours, preferably at least 1 hour, and more preferably at least 1.5 hours, and is generally 200 hours or less, preferably 100 hours or less, more preferably 12 hours or less, and still more preferably 5 hours or less.

The method of carrying out the vapor heating step while satisfying the above conditions is exemplified by the method of placing the phosphors in an autoclave under a high humidity and a high pressure. Here, in addition to an autoclave, or instead of using an autoclave, use may be made of an apparatus such as a pressure cooker that can set the phosphors under high-temperature and humidity conditions to the same degree as an autoclave. The pressure cooker used may be, for example, a TPC-412M (ESPEC Corp.), with which it is possible to control the temperature to from 105°C to 162.2°C, the humidity to from 75 to 100% (depending on the temperature conditions), and the pressure to from 0.020 MPa to 0.392 MPa (0.2 kg/cm$^2$ to 4.0 kg/cm$^2$).

By holding the phosphors in an autoclave and carrying out a vapor heating step, it is possible to form a special layer of water in a high-temperature, high-pressure and high-humidity environment, thus enabling adsorbed water to be made present on the phosphor surface in a particularly short time. Specifically, it is desirable for the pressure to be at least normal pressure (0.1 MPa) and for the phosphors to be placed for at least 0.5 hours in an environment where vapor is present.

More preferable conditions are described below. The pressure is preferably at least 0.2 MPa, and even more preferably at least 0.3 MPa, and is generally 10 MPa or less, preferably 1 MPa or less, and more preferably 0.5 MPa or less. The vapor is preferably saturated vapor (the vapor when a vapor phase and a liquid phase are present together in equilibrium under a given fixed pressure). The phosphors should be placed in this environment for preferably at least 1 hour, and more preferably at least 1.5 hours, and for generally 12 hours or less, preferably 5 hours or less, and more preferably 3 hours or less.

The phosphors should be placed in a vessel made of alumina, porcelain or the like and placed in an autoclave. Steps such as acid washing, classification and surface treatment may be carried out beforehand on the phosphors, although desirable effects can be obtained even when the fired phosphors are used as is.

(Surface treatment step)

When the phosphor of the present invention is used to manufacture a light emitting device, the surface of the phosphors may be subjected to surface treatment if necessary such as covering the surfaces with some foreign compound, in order to improve weatherability such as moisture resistance or to improve dispersibility in a resin in the phosphor-containing part of the light emitting device described later. The surface treatment may be performed before or after a vapor heat treatment step. Unless the surface treatment prevents the presence of special adsorbed water obtained by the vapor heat treatment or has the effect of removing the adsorbed water, both of the treatments may be performed at the same time.

Examples

The present invention will be further explained specifically below by referring to examples and Comparative Examples. However, the present invention is not limited to the examples and any modifications can be added thereto insofar as they do not depart from the scope of the present invention.

Measurement of the emission characteristics, etc. of the phosphors obtained in the Examples and the Comparative Examples was carried out by the following methods.

[Emission spectrum]

The emission spectrum was measured using a 150 W Xenon lamp as the excitation light source and using an MCPD 7000 (Otsuka Electronics Co., Ltd.) as the spectrometer. An emission spectrum was obtained by measuring the emission intensity at each wavelength with the spectrometer over a wavelength range of from 380 nm to 800 nm using excitation light having a wavelength of 455 nm.

[Color coordinates]

The color coordinates of x, y colorimetric system (CIE 1931 colorimetric system) were calculated, as color coordinates x and y of the XYZ colorimetric system defined in JIS Z8701, by a method in accordance with JIS Z8724 from the data of the emission spectra in the wavelength region of from 480 nm to 780 nm obtained by the above-mentioned method. Relative luminance is represented by a relative value when YAG (Product Number: P46-Y3) manufactured by Kasei Optonix Co., Ltd. is excited with light at the wavelength of 455 nm and when the value Y of the XYZ colorimetric system is set at 100.

(Quantum Efficiency)

The internal quantum efficiency was measured using a FP-6500 (JASCO Corporation). The amount of document used for measurement was 1 g, and measurement was carried out at an excitation wavelength of 455 nm. Emission was measured in the range of 480 to 780 nm.

The method of measuring the internal quantum efficiency differs with the apparatus used, although the principle is the same as that described in Patent Document 1.

(Particle Size Measurement)

The particle diameter was measured by the electrical sensing zone method using a Coulter Multisizer II (Beckman Coulter). The aperture size used was 100 $\mu$m, and measurement was carried out after first ultrasonically dispersing the phosphors in water.

(Measurement of Specific Surface Area by BET Method)

A BET specific surface area analyzer MS-9 (Yuasa Ionics KK) was used for measurement. About 1.3 g of phosphors was charged into a U-tube and degassed for 15 minutes at 150°C, following which nitrogen adsorption was effected and the specific surface area was computed from the quantity of adsorbed nitrogen using the principle of the BET 1-point method.

(Thermogravimetric Measurement by Analysis of Emitted Gases)

Analysis of the quantity of adsorbed water was carried out with a gas analyzer. The quantity of emitted gas was analyzed by measurement with a gas analyzer for phosphor analysis (ANELVA) using an M-QA200TS (ANELVA) as the detector for mass spectroscopic analysis. The gas having a molecular weight of 18 is regarded as water. 0.15 g of phosphors was used and measurement was carried out while the temperature was raised to 1000°C at a rate of 33°C/min.

(Infrared absorption spectrum)

Infrared absorption spectroscopy was carried out with an AVATOR 360 (Nicolet), and spectral data acquisition and conversion using the Kubelka-Munk function were carried out with software (OMNIC E.S.P.) supplied with the spectrometer. Measurement was carried out under the following conditions: number of scans, 32; resolution, 4; and while passing a stream of nitrogen gas over the sample stage during measurement.

Next, the method of manufacturing actual phosphors is described.

<Example 1>

(Preparation of Raw Materials)

The alloy La:Si = 1:1 (molar ratio), $Si_3N_4$ and $CeF_3$ were weighed out such that La:Si = 3:6 (molar ratio) and $CeF_3$/(alloy + $Si_3N_4$) = 6 wt%. The weighed out raw materials were mixed together in a ball mill, then passed through a nylon mesh sieve, thereby preparing the raw materials. The operations from weighing out to preparation were carried out within a glove box having a nitrogen atmosphere with an oxygen concentration of 1% or less, and ball milling was carried out in a double vessel set out in open air that consisted of a nitrogen-sealed plastic pot within a similarly nitrogen-sealed closed vessel. Nylon-coated iron balls were used as the ball mill media (balls).

(Firing step)

The prepared raw materials were charged into a Mo crucible and set within an electric furnace. The interior of the furnace was evacuated, following which the internal temperature was raised to 120°C. After confirming the interior pressure to be a vacuum, hydrogen-containing nitrogen gas (nitrogen : hydrogen = 96:4 (volume ratio)) was introduced up to atmospheric pressure. Next, the internal temperature was raised to 1550°C and held at 1550°C for 8 hours, following which temperature ramp-down was begun, bringing firing treatment to completion and yielding phosphors.

(Washing step)

The fired phosphors were passed through a nylon mesh sieve, ground in a ball mill and agitated for at least 1 hour in 1N hydrochloric acid, and subsequently rinsed with water. The washed phosphors were then dewatered, dried in a hot-air dryer at 120°C, and recovered by being passed through a nylon mesh sieve.

(Vapor Heat Treatment)

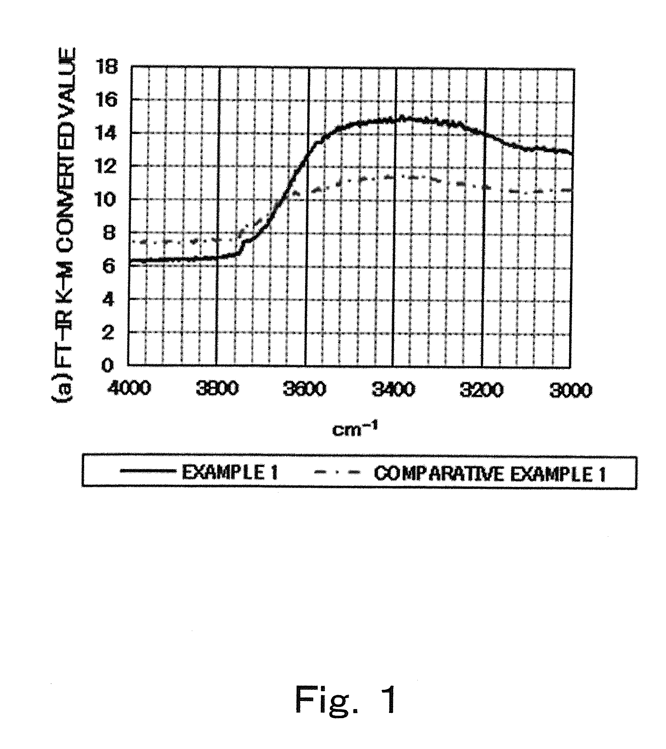

The phosphors obtained in the above washing step were placed in a glass sample bottle, following which this sample bottle was set in an autoclave (Hiclave HG-50, Hirayama Manufacturing Corp.) and left to stand for 20 hours. The environment within the autoclave was saturated steam, 135°C and 0.33 MPa. The above-mentioned pressure value is the pressure indicated on the autoclave (differential pressure with normal pressure) to which the normal pressure of 0.1 MPa has been added. After standing in the autoclave, the phosphors were dried for 2 hours in a 140°C hot-air dryer, giving the finished Phosphors 1. The color coordinates, luminance and particle diameter of the resulting phosphors are shown in Table 1. FIG. 1 shows the values obtained by converting the resulting infrared absorption spectrum to Kubelka-Munk function values.

<Example 2>

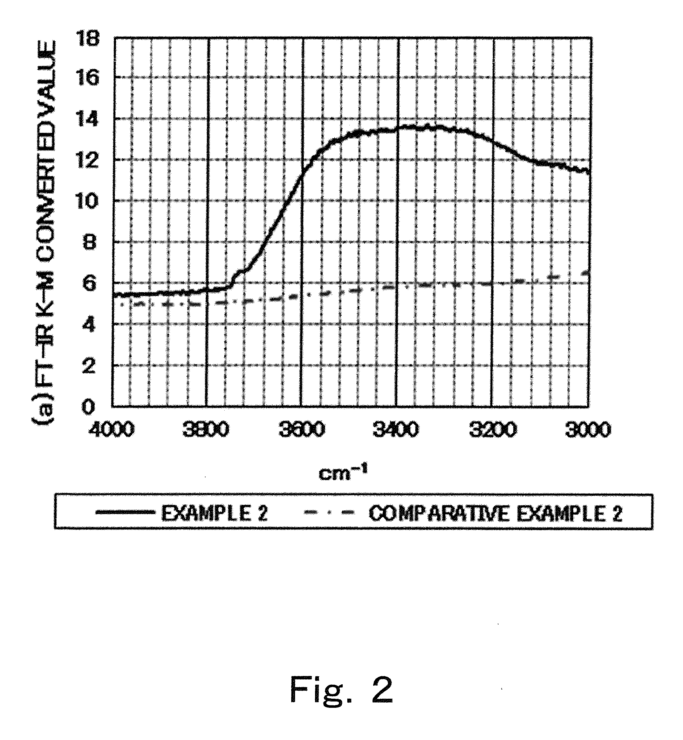

Aside from changing the length of time for which the fired phosphors are ground in the washing step so as to render the phosphors to the particle diameter shown in Table 1, Phosphors 2 were obtained in the same way as in Example 1. The color coordinates, luminance and particle diameter of the resulting phosphors are shown in Table 1. FIG. 2 shows the values obtained by converting the resulting infrared absorption spectrum to Kubelka-Munk function values.

<Example 3>

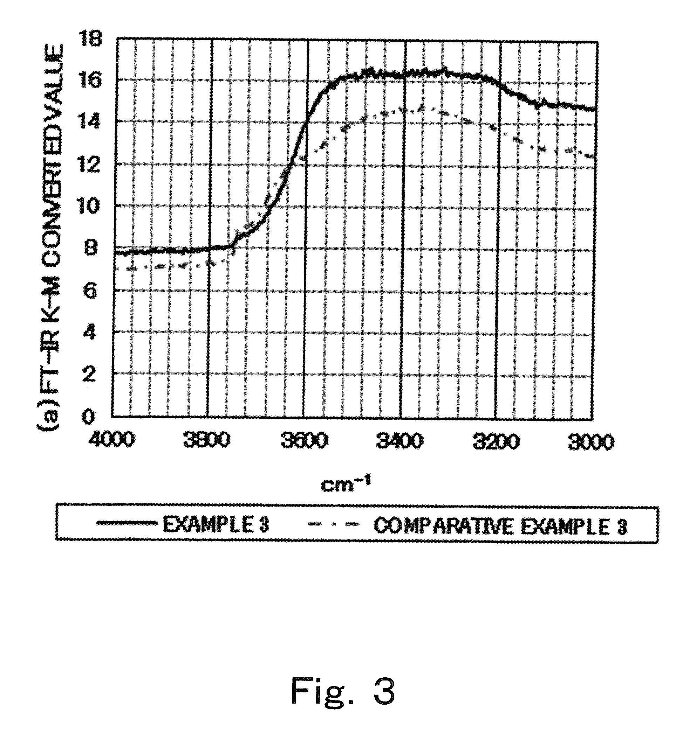

Aside from changing the media to zirconia balls during mixture within a ball mill when preparing the raw material and changing the length of time for which the fired phosphors are ground in the washing step so as to render the phosphors to the particle diameter shown in Table 1, Phosphors 3 were obtained in the same way as in Example 1. The color coordinates, luminance and particle diameter of the resulting phosphors are shown in Table 1. FIG. 3 shows the values obtained by converting the resulting infrared absorption spectrum to Kubelka-Munk function values.

<Example 4>

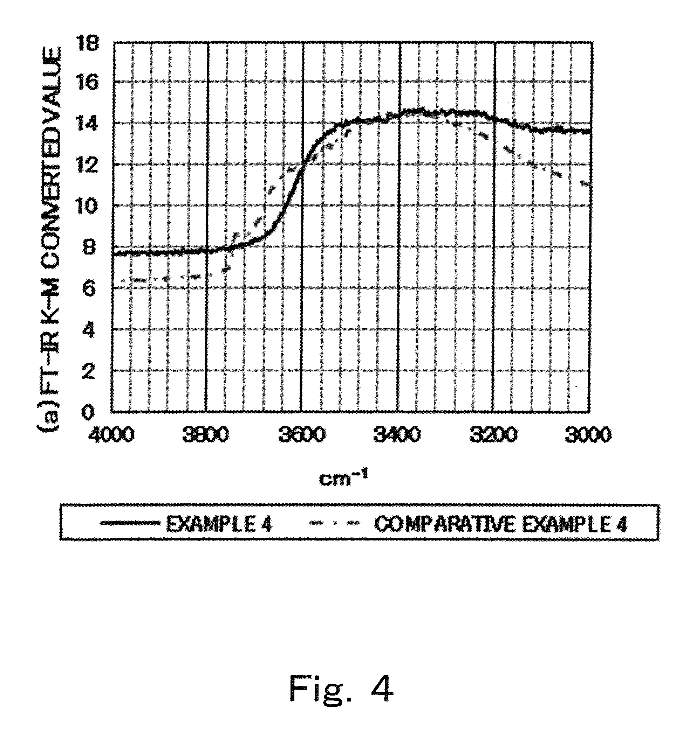

Aside from not carrying out a washing step, Phosphors 4 were obtained in the same way as in Example 3. The color coordinates, luminance and particle diameter of the resulting phosphors are shown in Table 1. FIG. 4 shows the values obtained by converting the resulting infrared absorption spectrum to Kubelka-Munk function values.

<Example 5>

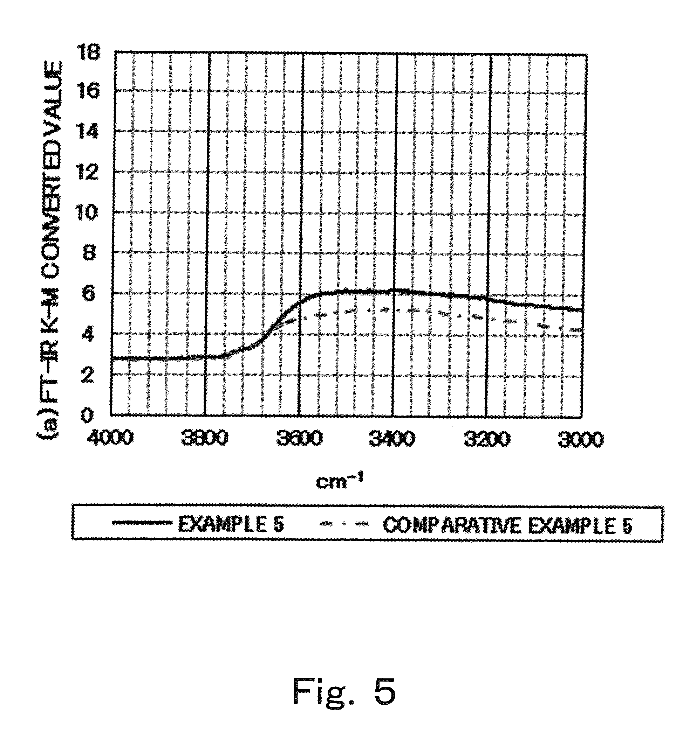

Aside from, in preparation of the raw material, producing a raw material by carrying mixture in a ball mill with nylon-coated iron balls and producing another raw material by carrying mixture in a ball mill with zirconia balls, then mixing these two types of raw materials together in a nylon bag and, upon entering the next step, cutting out particles 10 $\mu$m or larger by settling separation in water, Phosphors 5 were obtained in the same way as in Example 1. The color coordinates, luminance and particle diameter of the resulting phosphors are shown in Table 1. FIG. 5 shows the values obtained by converting the resulting infrared absorption spectrum to Kubelka-Munk function values.

<Example 6>

(Preparation of Raw Materials)

LaN, $Si_3N_4$ and $CeF_3$ were weighed out such that La:Si = 3:6 (molar ratio) and $CeF_3$/ (LaN + $Si_3N_4$) = 3.8 wt%. The weighed out raw materials were mixed together using a mortar and pestle, then passed through a nylon mesh sieve, thereby preparing the raw material. The operations from weighing out to preparation were carried out within a glove box having a nitrogen atmosphere with an oxygen concentration of 1% or less.

(Firing step)

The prepared raw materials were charged into a Mo crucible and set within an electric furnace equipped with a tungsten heater. The interior of the furnace was evacuated, following which the internal temperature was raised to 120°C. After confirming the interior pressure to be a vacuum, hydrogen-containing nitrogen gas (nitrogen : hydrogen = 96:4 (volume ratio)) was introduced up to atmospheric pressure. Next, the internal temperature was raised to 1300°C and held for 4 hours, thereby carrying out initial firing. The fired product obtained after initial firing was ground up using a mortar and pestle within the glovebox, then passed through a nylon mesh sieve. The temperature within the furnace was then ramped up to 1525°C and held at that temperature for 15 hours, following which temperature ramp-down was begun, bringing firing treatment to completion and yielding phosphors.

(Washing step)

The fired phosphors were agitated for 3 hours in 1N hydrochloric acid and then rinsed with water. Next, the phosphors were dewatered, then dried in a hot-air dryer at 150°C and recovered by being passed through a nylon mesh sieve.

(Vapor Heat Treatment)

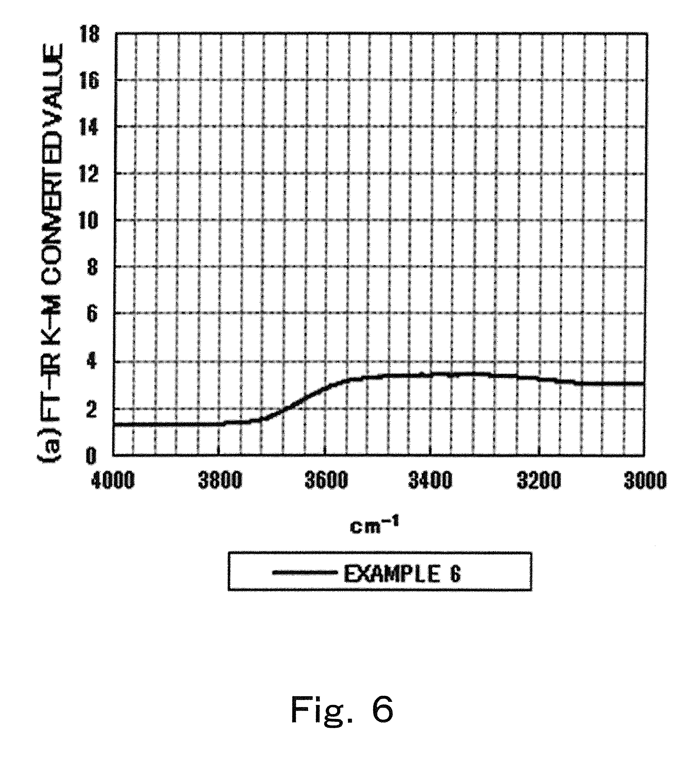

The phosphors obtained in the above washing step were placed in a glass sample bottle, following which this sample bottle was set in an autoclave (Hiclave HG-50, Hirayama Manufacturing Corp.) and left to stand for 20 hours. The environment within the autoclave was saturated steam, 135°C and 0.33 MPa. The above-mentioned pressure value is the pressure indicated on the autoclave (differential pressure with normal pressure) to which the normal pressure of 0.1 MPa has been added. The phosphors after standing in the autoclave were dried 2 hours in a 140°C hot-air dryer, giving the finished Phosphors 6. The color coordinates, luminance and particle diameter of the resulting phosphors are shown in Table 1. FIG. 6 shows the values obtained by converting the resulting infrared absorption spectrum to Kubelka-Munk function values.

<Comparative Examples 1-6>

Aside from not carrying out vapor heat treatment, phosphors were produced in the same way as in Examples 1 to 6, thereby giving Comparative Phosphors 1 to 6. The color coordinates, luminances and particle diameters of the resulting comparative phosphors are shown in Table 1. FIGS. 1 to 5 show the infrared absorption spectra for Comparative Phosphors 1 to 5.

As is apparent from Table 1, the phosphors in the Examples which were subjected to the above heat treatment exhibited an approximately 10% increase in relative luminance.

[Table 1]

Table 1

|  | Chromaticity coordinate x | Chromaticity coordinate y | Relative luminance | Particle diameter (μm) |
|---|---|---|---|---|
| Example 1 | 0.425 | 0.555 | 137 | 30.6 |
| Example 2 | 0.419 | 0.558 | 139 | 19.6 |
| Example 3 | 0.419 | 0.559 | 139 | 20.3 |
| Example 4 | 0.423 | 0.553 | 82 | 28.2 |
| Example 5 | 0.408 | 0.563 | 118 | 6.7 |
| Example 6 | 0.429 | 0.553 | 145 | 28.8 |
| Comparative Example 1 | 0.424 | 0.555 | 125 | 29.7 |
| Comparative Example 2 | 0.420 | 0.557 | 125 | 19.1 |
| Comparative Example 3 | 0.420 | 0.558 | 127 | 19.8 |
| Comparative Example 4 | 0.424 | 0.552 | 75 | 27.7 |
| Comparative Example 5 | 0.409 | 0.561 | 108 | 6.8 |
| Comparative Example 6 | 0.427 | 0.554 | 136 | 28.8 |

Next, from the infrared absorption spectrum in FIG. 1, calculations were carried out to determine whether the phosphor of Example 1 and the phosphor of Comparative Example 1 correspond to the phosphor of the invention. Tables 2 and 3 show respectively (a) the values obtained by converting the absorption spectrum into Kubelka-Munk function values, and (b) the slopes between two adjoining measured values. For example, the value in the 3593 cm$^{-1}$ row has been calculated using the 3593 cm$^{-1}$ and 3595 cm$^{-1}$ values. This is thus the value of the slope between two points determined using the value of the neighboring point on the large value side. Hence, the slope at 3608 cm$^{-1}$ is calculated using the 3610 cm$^{-1}$ value. As can be seen from Tables 2 and 3, the average of the (b) values in Example 1 is -5.000E-02 (exponential notation using the symbol E). When this is divided by 1.508E+01, which is the maximum value in the range from 3250 cm$^{-1}$ to 3500 cm$^{-1}$, the result is - 3.3E-03. In Comparative Example 1, the average of (b) is - 9.592E-03; when this is divided by 1.151E+01, which is the maximum value in the range from 3250 cm$^{-1}$ to 3500 cm$^{-1}$, the result is -8.3E-04. Table 4 similarly gives the Kubelka-Munk function values for Example 2, their slopes and a maximum value. Likewise, Table 5 gives the values for Comparative Example 2, Table 6 gives the values for Example 3, Table 7 gives the values for Comparative Example 3, Table 8 gives the values for Example 4, Table 9 gives the values for Comparative Example 4, Table 10 gives the values for Example 5, Table 11 gives the values for Comparative Example 5, and Table 12 gives the values for Example 6. The calculated results are shown in Table 13.

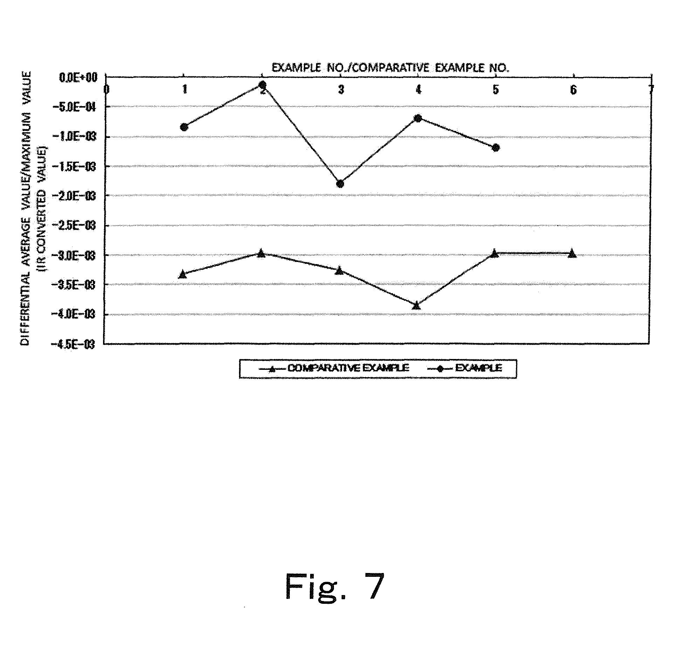

FIG. 7 is a graph in which (d) values at 3601 cm$^{-1}$ have been plotted, each (d) value being a numerical values obtained by, for the above (b) values, calculating the average of 5 measured values before and after a measurement wavelength (a total of 9 points) as a (c) value, and dividing the (c) value by the maximum value. It is apparent from the graph that there are clear differences between the values obtained for Phosphors 1 to 6 in the Examples of the invention and the values obtained for Comparative Phosphors 1 to 5. By calculating such parameters, it can easily be determined whether the phosphors obtained are phosphors according to the invention.

[Table 2]

Table 2: Example 1

| cm$^{-1}$ | (a) | (b) | |
|---|---|---|---|
| 3593 | 1.290E+01 | 0.000E+00 | |
| 3595 | 1.290E+01 | -5.000E-02 | |
| 3597 | 1.280E+01 | -5.000E-02 | |
| 3599 | 1.270E+01 | 0.000E+00 | |
| 3601 | 1.270E+01 | -1.000E-01 | |
| 3603 | 1.250E+01 | -1.000E-01 | |
| 3604 | 1.240E+01 | -5.000E-02 | |
| 3606 | 1.230E+01 | -1.000E-01 | |
| 3608 | 1.210E+01 | 0.000E+00 | |
| 3610 | 1.210E+01 | | |
| *Average value for (b) from 3593 to 3608cm$^{-1}$ | | | -5.000E-02 |
| *Maximum value for 3250 to 3500cm$^{-1}$ | | | 1.508E+01 |
| Above average value/maximum value | | | -3.3E-03 |

[Table 3]

Table 3: Comparative Example 1

| cm$^{-1}$ | (a) | (b) | |
|---|---|---|---|
| 3593 | 1.055E+01 | -3.112E-02 | |
| 3595 | 1.049E+01 | 1.037E-02 | |
| 3597 | 1.051E+01 | 3.629E-02 | |
| 3599 | 1.058E+01 | -1.037E-02 | |
| 3601 | 1.056E+01 | -2.074E-02 | |

(continued)

| cm$^{-1}$ | (a) | (b) | |
|---|---|---|---|
| 3603 | 1.052E+01 | 0.000E+00 | |
| 3604 | 1.052E+01 | -1.037E-02 | |
| 3606 | 1.050E+01 | -3.631E-02 | |
| 3608 | 1.043E+01 | -2.408E-02 | |
| 3610 | 1.039E+01 | | |
| *Average value for (b) from 3593 to 3608cm$^{-1}$ | | | -9.592E-03 |
| *Maximum value for 3250 to 3500cm$^{-1}$ | | | 1.151E+01 |
| Above average value/maximum value | | | -8.3E-04 |

[Table 4]

Table 4: Example 2

| cm$^{-1}$ | (a) | (b) | |
|---|---|---|---|
| 3593 | 1.157E+01 | | -2.000E-02 |
| 3595 | 1.153E+01 | | -4.500E-02 |
| 3597 | 1.144E+01 | | -2.000E-02 |
| 3599 | 1.140E+01 | -5.000E-02 | |
| 3601 | 1.130E+01 | -5.500E-02 | |
| 3603 | 1.119E+01 | -3.000E-02 | |
| 3604 | 1.116E+01 | -2.000E-02 | |
| 3606 | 1.112E+01 | -6.500E-02 | |
| 3608 | 1.099E+01 | -6.000E-02 | |
| 3610 | 1.087E+01 | | |
| *Average value for (b) from 3593 to 3608cm$^{-1}$ | | | -4.056E-02 |
| *Maximum value for 3250 to 3500cm$^{-1}$ | | | 1.370E+01 |
| Above average value/maximum value | | | -3.0E-03 |

[Table 5]

Table 5: Comparative Example 2

| cm$^{-1}$ | (a) | (b) | |
|---|---|---|---|
| 3593 | 5.361E+00 | -3.000E-03 | |
| 3595 | 5.355E+00 | -7.500E-03 | |
| 3597 | 5.340E+00 | -8.500E-03 | |
| 3599 | 5.323E+00 | -3.500E-03 | |
| 3601 | 5.330E+00 | -1.500E-03 | |
| 3603 | 5.327E+00 | 1.900E-02 | |
| 3604 | 5.346E+00 | 1.000E-02 | |
| 3606 | 5.366E+00 | -1.250E-02 | |
| 3608 | 5.341E+00 | 1.500E-03 | |

(continued)

| cm$^{-1}$ | (a) | (b) | |
|---|---|---|---|
| 3610 | 5.344E+00 | | |
| *Average value for (b) from 3593 to 3608cm$^{-1}$ | | | -6.667E-04 |
| *Maximum value for 3250 to 3500cm$^{-1}$ | | | 5.943E+00 |
| Above average value/maximum value | | | -1.1E-04 |

[Table 6]

Table 6: Example 3

| cm$^{-1}$ | (a) | (b) | |
|---|---|---|---|
| 3593 | 1.450E+01 | | -3.500E-02 |
| 3595 | 1.443E+01 | | -2.500E-02 |
| 3597 | 1.438E+01 | | -5.000E-02 |
| 3599 | 1.428E+01 | | -9.000E-02 |
| 3601 | 1.410E+01 | | -7.000E-02 |
| 3603 | 1.396E+01 | | -6.000E-02 |
| 3604 | 1.390E+01 | | 1.000E-02 |
| 3606 | 1.392E+01 | | -1.050E-01 |
| 3608 | 1.371E+01 | -6.500E-02 | |
| 3610 | 1.358E+01 | | |
| *Average value for (b) from 3593 to 3608cm$^{-1}$ | | | -5.444E-02 |
| *Maximum value for 3250 to 3500cm$^{-1}$ | | | 1.670E+01 |
| Above average value/maximum value | | | -3.3E-03 |

[Table 7]

Table 7: Comparative Example 3

| cm$^{-1}$ | (a) | (b) | |
|---|---|---|---|
| 3593 | 1.267E+01 | -3.000E-02 | |
| 3595 | 1.261E+01 | -4.000E-02 | |
| 3597 | 1.253E+01 | 5.000E-03 | |
| 3599 | 1.254E+01 | -3.500E-02 | |
| 3601 | 1.247E+01 | -5.000E-02 | |
| 3603 | 1.237E+01 | -5.000E-02 | |
| 3604 | 1.232E+01 | -3.000E-02 | |
| 3606 | 1.226E+01 | 0.000E+00 | |
| 3608 | 1.226E+01 | -1.000E-02 | |
| 3610 | 1.224E+01 | | |
| *Average value for (b) from 3593 to 3608cm$^{-1}$ | | | -2.667E-02 |
| *Maximum value for 3250 to 3500cm$^{-1}$ | | | 1.492E+01 |
| Above average value/maximum value | | | -1.8E-03 |

[Table 8]

Table 8: Example 4

| cm⁻¹ | (a) | (b) | |
|---|---|---|---|
| 3593 | 1.220E+01 | -3.500E-02 | |
| 3595 | 1.213E+01 | -3.000E-02 | |
| 3597 | 1.207E+01 | -7.000E-02 | |
| 3599 | 1.193E+01 | -8.500E-02 | |
| 3601 | 1.176E+01 | -3.500E-02 | |
| 3603 | 1.169E+01 | -1.000E-02 | |
| 3604 | 1.168E+01 | -3.500E-02 | |
| 3606 | 1.161E+01 | -1.250E-01 | |
| 3608 | 1.136E+01 | -8.500E-02 | |
| 3610 | 1.119E+01 | | |
| *Average value for (b) from 3593 to 3608cm⁻¹ | | | -5.667E-02 |
| *Maximum value for 3250 to 3500cm⁻¹ | | | 1.470E+01 |
| Above average value/maximum value | | | -3.9E-03 |

[Table 9]

Table 9: Comparative Example 4

| cm⁻¹ | (a) | (b) | |
|---|---|---|---|
| 3593 | 1.217E+01 | -1.500E-02 | |
| 3595 | 1.214E+01 | -3.500E-02 | |
| 3597 | 1.207E+01 | -3.000E-02 | |
| 3599 | 1.201E+01 | -5.000E-03 | |
| 3601 | 1.200E+01 | 1.500E-02 | |
| 3603 | 1.203E+01 | 5.000E-02 | |
| 3604 | 1.208E+01 | -1.000E-02 | |
| 3606 | 1.206E+01 | -5.500E-02 | |
| 3608 | 1.195E+01 | -5.000E-03 | |
| 3610 | 1.194E+01 | | |
| *Average value for (b) from 3593 to 3608cm⁻¹ | | | -1.000E-02 |
| *Maximum value for 3250 to 3500cm⁻¹ | | | 1.462E+01 |
| Above average value/maximum value | | | -6.8E-04 |

[Table 10]

Table 10: Example 5

| cm⁻¹ | (a) | (b) | |
|---|---|---|---|
| 3593 | 5.677E+00 | -1.550E-02 | |
| 3595 | 5.646E+00 | -1.100E-02 | |

(continued)

| cm⁻¹ | (a) | (b) | |
|---|---|---|---|
| 3597 | 5.624E+00 | -7.500E-03 | |
| 3599 | 5.609E+00 | -1.050E-02 | |
| 3601 | 5.588E+00 | -1.750E-02 | |
| 3603 | 5.553E+00 | -3.800E-02 | |
| 3604 | 5.515E+00 | -9.000E-03 | |
| 3606 | 5.497E+00 | -2.550E-02 | |
| 3608 | 5.446E+00 | -3.150E-02 | |
| 3610 | 5.383E+00 | | |
| *Average value for (b) from 3593 to 3608cm⁻¹ | | | -1.844E-02 |
| *Maximum value for 3250 to 3500cm⁻¹ | | | 6.204E+00 |
| Above average value/maximum value | | | -3.0E-03 |

[Table 11]

Table 11: Comparative Example 5

| cm⁻¹ | (a) | (b) | |
|---|---|---|---|
| 3593 | 4.807E+00 | -1.089E-02 | |
| 3595 | 4.786E+00 | -9.850E-03 | |
| 3597 | 4.767E+00 | -5.702E-03 | |
| 3599 | 4.756E+00 | -5.187E-04 | |
| 3601 | 4.755E+00 | -2.592E-03 | |
| 3603 | 4.750E+00 | -6.224E-03 | |
| 3604 | 4.738E+00 | -3.110E-03 | |
| 3606 | 4.732E+00 | -5.705E-03 | |
| 3608 | 4.721E+00 | -1.144E-02 | |
| 3610 | 4.702E+00 | | |
| *Average value for (b) from 3593 to 3608cm⁻¹ | | | -6.226E-03 |
| *Maximum value for 3250 to 3500cm⁻¹ | | | 5.268E+00 |
| Above average value/maximum value | | | -1.2E-03 |

[Table 12]

Table 12: Example 6

| cm⁻¹ | (a) | (b) | |
|---|---|---|---|
| 3593 | 2.914E+00 | -1.100E-02 | |
| 3595 | 2.892E+00 | -9.500E-03 | |
| 3597 | 2.873E+00 | -1.100E-02 | |
| 3599 | 2.851E+00 | -1.000E-02 | |
| 3601 | 2.831E+00 | -7.000E-03 | |
| 3603 | 2.817E+00 | -2.200E-02 | |

(continued)

| cm⁻¹ | (a) | (b) | |
|---|---|---|---|
| 3604 | 2.795E+00 | -6.500E-03 | |
| 3606 | 2.782E+00 | -4.000E-03 | |
| 3608 | 2.774E+00 | -1.150E-02 | |
| 3610 | 2.751E+00 | | |
| *Average value for (b) from 3593 to 3608cm⁻¹ | | | -1.028E-02 |
| *Maximum value for 3250 to 3500cm⁻¹ | | | 3.462E+00 |
| Above average value/maximum value | | | -3.0E-03 |

[Table 13]

Table 13: Results of Calculations

| | Calculated values (c) from infrared absorption spectrum |
|---|---|
| Example 1 | -3.3E-03 |
| Example 2 | -3.0E-03 |
| Example 3 | -3.3E-03 |
| Example 4 | -3.9E-03 |
| Example 5 | -3.0E-03 |
| Example 6 | -3.0E-03 |
| Comparative Example 1 | -8.3E-04 |
| Comparative Example 2 | -1.1E-04 |
| Comparative Example 3 | -1.8E-03 |
| Comparative Example 4 | -6.8E-04 |
| Comparative Example 5 | -1.2E-03 |

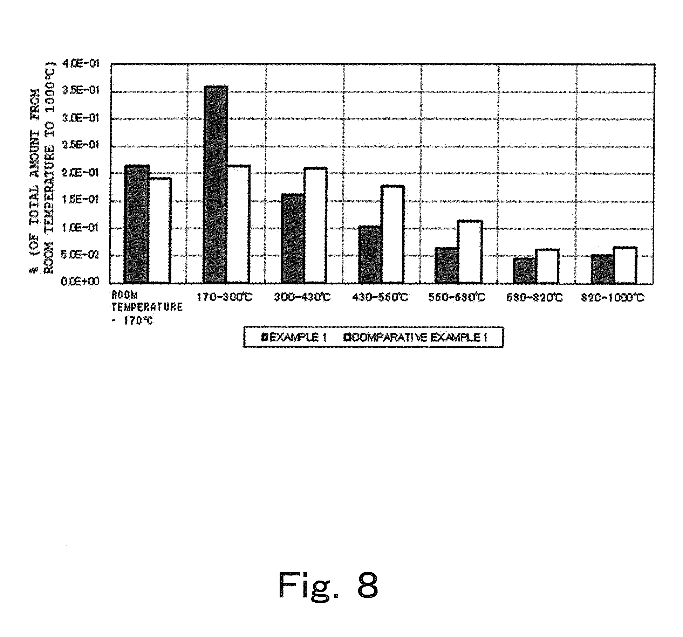

Next, analysis of the amount of emitted gases was carried out so as to measure the amount of moisture adsorbed onto the phosphors. The results are shown in FIG. 8. From these results, it was learned that, in the phosphors of Example 1, about 36% of the total adsorbed water on the phosphors desorbed at between 170°C and 300°C. In the phosphors of Comparative Example 1, about 21% of the total adsorbed water on the phosphors desorbed at between 170°C and 300°C.

Next, Table 14 shows, for the phosphors in Example 1 and Comparative Example 1, the specific surface areas as the values (a) determined by the above-described BET 1-point method, the values (b) calculated by the Coulter counter method using the above-described formula, and the ratios therebetween. It is apparent that, in the phosphors of the invention, the surface area determined by the BET method greatly decreases, as a result of which the value (a)/(b) becomes 20 or less.

[Table 14]

Table 14 Calculated values of specific surface area by BET method ([a] values) and Coulter counter method ([b] values)

| | [a] | [b] | [a]/[b] |
|---|---|---|---|
| Example 1 | 0.56 | 0.04 | 14 |
| Comparative Example 1 | 1.52 | 0.04 | 36.8 |

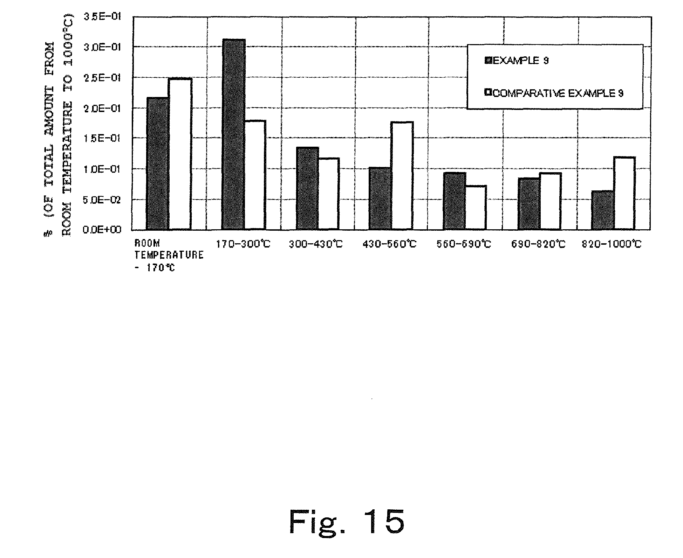

The internal quantum efficiency and the external quantum efficiency were measured for the phosphors of Example 3 and the phosphors of Comparative Example 3. The results are shown in FIG. 15.

[Table 15]

Table 15: Internal quantum efficiency and external quantum efficiency

|  | Internal quantum efficiency (%) | External quantum efficiency (%) |
|---|---|---|
| Example 3 | 74.3 | 65.7 |
| Comparative Example 3 | 68.2 | 59 |

From these results, it is apparent that the phosphors of the invention have both increased internal quantum efficiencies and increased external quantum efficiencies.

<Example 7>

(Preparation of Raw Materials)

The alloy La:Si = 1:1 (molar ratio), $Si_3N_4$, $CeF_3$ and $GdF_3$ were weighed out such that La:Si = 3:6 (molar ratio), $CeF_3$/ (alloy + $Si_3N_4$) = 6 wt% and $GdF_3$/ (alloy + $Si_3N_4$) = 13 wt%. The weighed out raw materials were mixed together in a mortar, then passed through a nylon mesh sieve, thereby preparing the raw material. The operations from weighing out to preparation were carried out within a glove box having a nitrogen atmosphere with an oxygen concentration of 1% or less.

(Firing step)

The prepared raw materials were charged into a Mo crucible and set within an electric furnace. The interior of the furnace was evacuated, following which the internal temperature was raised to 120°C. After confirming the interior pressure to be a vacuum, hydrogen-containing nitrogen gas (nitrogen : hydrogen = 96:4 (volume ratio)) was introduced up to atmospheric pressure. Next, the internal temperature was raised to 1550°C and held at 1550°C for 8 hours, following which temperature ramp-down was begun, bring firing treatment to completion and yielding phosphors.

(Washing step)

The fired phosphors were passed through a nylon mesh sieve, then agitated for at least 1 hour in 1N hydrochloric acid, and subsequently rinsed with water and dewatered. The washed phosphors were then dried in a hot-air dryer at 120°C, and recovered by being passed through a nylon mesh sieve.

(Vapor Heat Treatment)

The phosphors obtained in the above washing step were placed in a glass sample bottle, following which this sample bottle was set in an autoclave (Hiclave HG-50, Hirayama Manufacturing Corp.) and left to stand for 20 hours. The environment within the autoclave was saturated steam, 135°C and 0.33 MPa. The above-mentioned pressure value is the pressure indicated on the autoclave (differential pressure with normal pressure) to which the normal pressure of 0.1 MPa has been added. After standing in the autoclave, the phosphors were dried for 2 hours in a 140°C hot-air dryer, giving the finished phosphors. The color coordinates and luminance of the resulting phosphors are shown in Table 16.

<Example 8>

(Preparation of Raw Materials)

Aside from weighing out the alloy La:Si = 1:1 (molar ratio), $Si_3N_4$ and $LaF_3$ such that La:Si = 3:6 (molar ratio) and $LaF_3$/ (alloy + $Si_3N_4$) = 6 wt%, the phosphors of Example 8 were produced in the same way as in Example 7. The color coordinates and luminance of the resulting phosphors are shown in Table 16. La:Ce:Y = 0.81:0.06:0.13 (molar ratio) were used as the Ln of the alloy.

<Comparative Examples 7-8>

Aside from not carrying out vapor heat treatment, the phosphors of Comparative Example 7 were produced in the same way as in Example 7. Also, aside from not carrying out vapor heat treatment, the phosphors of Comparative Example 8 were produced in the same way as in Example 8. The color coordinates and luminances of the resulting phosphors are shown in Table 16.

As is apparent from comparing the phosphors of Example 7 with those of Comparative Example 7 and the phosphors of Example 8 with those of Comparative Example 8, it was possible to confirm that phosphors produced by the manufacturing method of this invention exhibit distinct luminance-improving effects even when elements such as Y and Gd have been added.

[Table 16]

Table 16

|  | Chromaticity coordinate x | Chromaticity coordinate y | Relative luminance |
|---|---|---|---|
| Example 7 | 0.447 | 0.539 | 87 |
| Comparative Example 7 | 0.448 | 0.539 | 83 |
| Example 8 | 0.446 | 0.539 | 85 |
| Comparative Example 8 | 0.447 | 0.539 | 80 |

<Example 9>

(Preparation of Raw Materials)

The alloy La:Si = 1:1 (molar ratio), $Si_3N_4$ and $CeF_3$ were weighed out such that La:Si = 3:6 (molar ratio), $CeF_3$/ (alloy + $Si_3N_4$) = 6 wt% and $Y_2O_3$/ (alloy + $Si_3N_4$) = 6 wt%. The weighed out raw materials were mixed together, then passed through a nylon mesh sieve, thereby preparing the raw material. The operations from weighing out to preparation were carried out within a glove box having a nitrogen atmosphere with an oxygen concentration of 1% or less.

(Firing step)

The prepared raw materials were charged into a Mo crucible and set within an electric furnace equipped with a tungsten heater. The interior of the furnace was evacuated, following which the internal temperature was raised to 120°C. After confirming the interior pressure to be a vacuum, hydrogen-containing nitrogen gas (nitrogen : hydrogen = 96:4 (volume ratio)) was introduced up to atmospheric pressure. Next, the internal temperature was raised to 1550°C and held at 1550°C for 12 hours, following which temperature ramp-down was begun, bringing firing treatment to completion and yielding phosphors.

(Washing step)

The fired phosphors were passed through a nylon mesh sieve, then agitated for at least 1 hour in 1N hydrochloric acid, and subsequently rinsed with water and dewatered.

(Vapor Heat Treatment)

The same treatment was carried out as in Example 1, giving the finished Phosphors 9.

<Example 10>

(Preparation of Raw Materials)

The alloy La:Si = 1:1 (molar ratio), $Si_3N_4$ and $CeF_3$ were weighed out such that La:Si = 3:6 (molar ratio), $CeF_3$/ (alloy + $Si_3N_4$) = 6 wt% and $GdF_3$/ (alloy + $Si_3N_4$) = 9 wt%. The weighed out raw materials were mixed together, then passed through a nylon mesh sieve, thereby preparing the raw material. The operations from weighing out to preparation were carried out within a glove box having a nitrogen atmosphere with an oxygen concentration of 1% or less.

The operations from the firing step to the vapor heat treatment were carried out in the same way as in Example 1, giving the finished Phosphors 10.

<Example 11>

(Preparation of Raw Materials)

The alloy La:Si = 1:1 (molar ratio), $Si_3N_4$ and $CeF_3$ were weighed out such that La:Si = 3:6 (molar ratio), $CeF_3$/(alloy + $Si_3N_4$) = 6 wt% and $La_2(CO_3)_2$/(alloy + $Si_3N_4$) = 2 wt%. The weighed out raw materials were mixed together, then passed through a nylon mesh sieve, thereby preparing the raw material. The operations from weighing out to preparation were carried out within a glove box having a nitrogen atmosphere with an oxygen concentration of 1% or less.

(Firing step)

The prepared raw materials were charged into a Mo crucible and set within an electric furnace equipped with a tungsten heater. The interior of the furnace was evacuated, following which the internal temperature was raised to 300°C. After confirming the interior pressure to be a vacuum, hydrogen-containing nitrogen gas (nitrogen : hydrogen = 96:4 (volume ratio)) was introduced up to atmospheric pressure. Next, initial firing was carried out by raising the internal temperature to 1350°C and holding that temperature for 4 hours. The fired product after initial firing was ground using a mortar and pestle within a glovebox, then passed through a nylon mesh sieve. The temperature within the furnace was then raised to 1525°C and held at that temperature for 12 hours, following which temperature ramp-down was begun, bringing firing treatment to completion and yielding phosphors.
The operations from the washing step to the vapor heat treatment were carried out in the same way as in Example 1, giving finished Phosphors 11.

<Example 12>

(Preparation of Raw Materials)

The alloy La:Si = 1:1 (molar ratio), $Si_3N_4$ and $CeF_3$ were weighed out such that La:Si = 3:6 (molar ratio), $CeF_3$/(alloy + $Si_3N_4$) = 6 wt% and CaO/(alloy + $Si_3N_4$) = 1 wt%. The weighed out raw materials were mixed together, then passed through a nylon mesh sieve, thereby preparing the raw material. The operations from weighing out to preparation were carried out within a glove box having a nitrogen atmosphere with an oxygen concentration of 1% or less.
The operations from the firing step to the vapor heat treatment were carried out in the same way as in Example 1, giving finished Phosphors 12.

<Example 13>

(Preparation of Raw Materials)

The alloy La:Si = 1:1 (molar ratio), $Si_3N_4$ and $CeF_3$ were weighed out such that La:Si = 3:5.8 (molar ratio) and $CeF_3$/(alloy + $Si_3N_4$) = 5 wt%. In addition, 5 wt% (based on the weight of the overall raw materials) of $La_3Si_6N_{11}$:Ce phosphors was weighed out as a raw material. The weighed out raw materials were mixed together, then passed through a nylon mesh sieve, thereby preparing the raw material. The operations from weighing out to preparation were carried out within a glove box having a nitrogen atmosphere with an oxygen concentration of 1% or less.
This was fired under the same firing conditions as in Example 11, and a washing step carried out under the same conditions as in Example 1.

(Vapor Heat Treatment)

The phosphors obtained in the above washing step were placed in a glass sample bottle, following which this sample bottle was set in high-temperature, high-humidity tester (PC-305S, Hirayama Manufacturing Corp.) and left to stand for 40 hours. The environment within the autoclave was saturated steam, 158°C and 0.49 MPa. The above-mentioned pressure value is the pressure indicated on the autoclave (differential pressure with normal pressure) to which the normal pressure of 0.1 MPa has been added. After standing in the autoclave, the phosphors were dried for 2 hours in a 140°C hot-air dryer, giving the finished Phosphors 13.

<Comparative Examples 9-13>

Aside from not carrying out vapor heat treatment, the phosphors in Comparative Examples 9 to 13 were obtained in the same way as in Examples 9 to 13.

The color coordinates and luminances of the phosphors obtained in Examples 9 to 13 and Comparative Examples 9 to 13 are shown in Table 17. It is apparent from Table 17 that the phosphors of the examples in which vapor heat treatment was carried out have a much increased relative luminance.

[Table 17]

Table 17

|  | Chromaticity coordinate x | Chromaticity coordinate y | Relative luminance |
|---|---|---|---|
| Example 9 | 0.455 | 0.532 | 130 |
| Example 10 | 0.441 | 0.543 | 120 |
| Example 11 | 0.415 | 0.561 | 138 |
| Example 12 | 0.432 | 0.549 | 134 |
| Example 13 | 0.419 | 0.558 | 138 |
| Comparative Example 9 | 0.454 | 0.533 | 119 |
| Comparative Example 10 | 0.442 | 0.543 | 115 |
| Comparative Example 11 | 0.415 | 0.560 | 125 |
| Comparative Example 12 | 0.432 | 0.548 | 119 |
| Comparative Example 13 | 0.419 | 0.557 | 123 |
| Note: The relative luminance is the value obtained relative to an arbitrary value of 100 for the Y value in the XYZ color coordinate system when a YAG manufactured by Kasei Optonix (product number P46-Y3) has been excited with light having a wavelength of 455 nm. | | | |

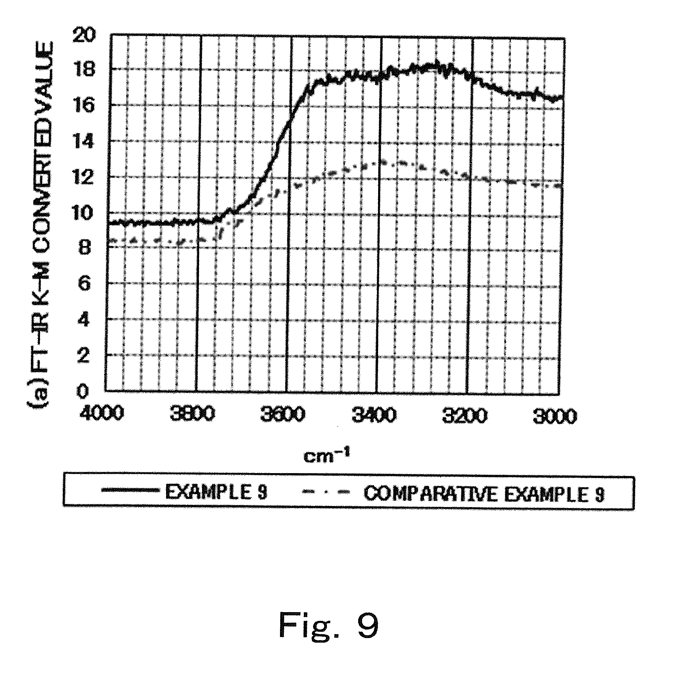

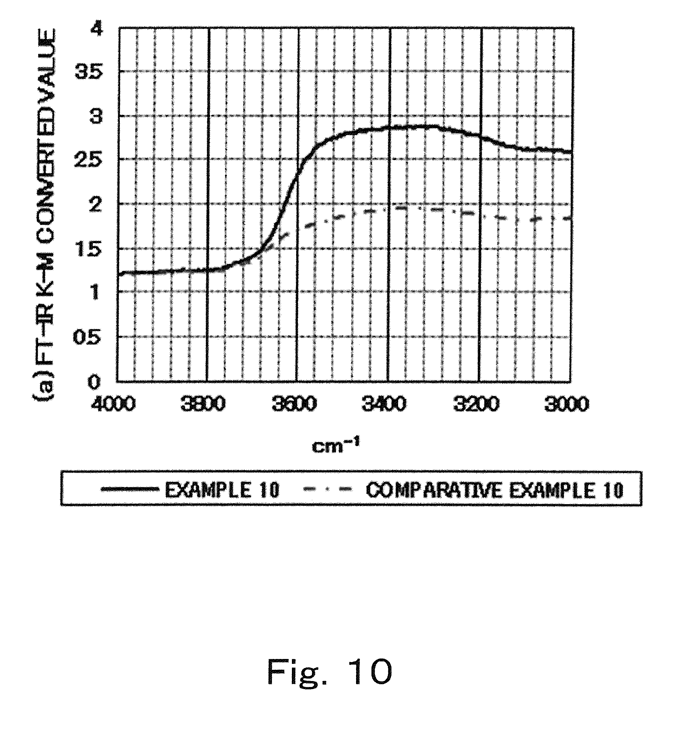

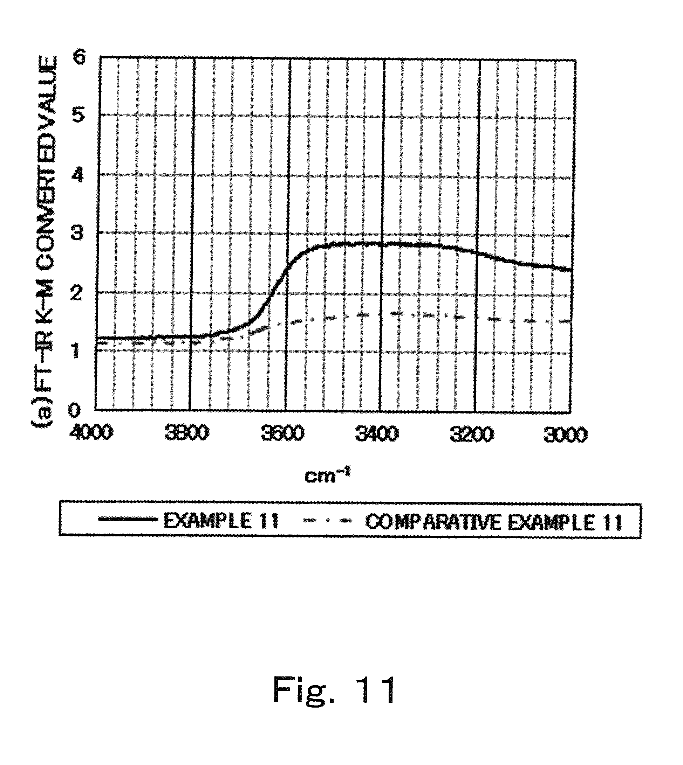

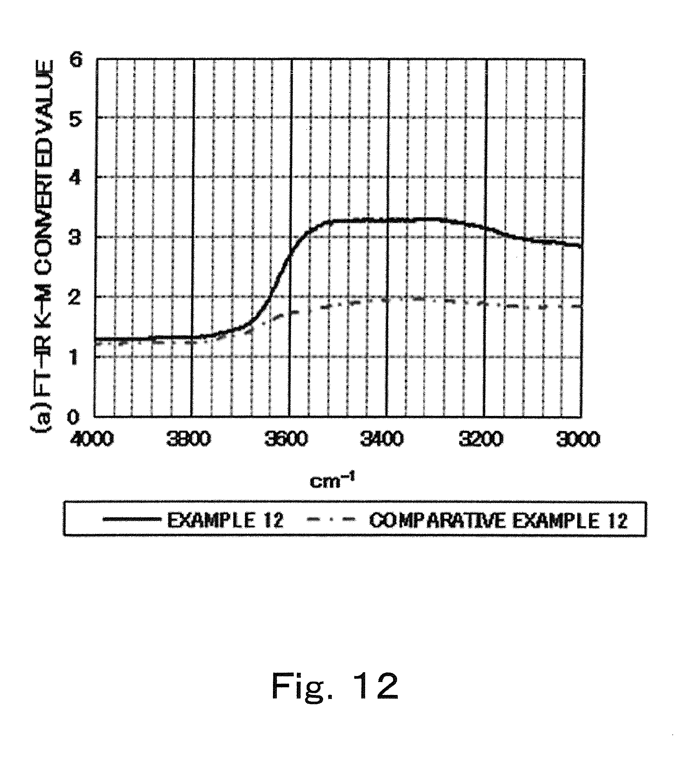

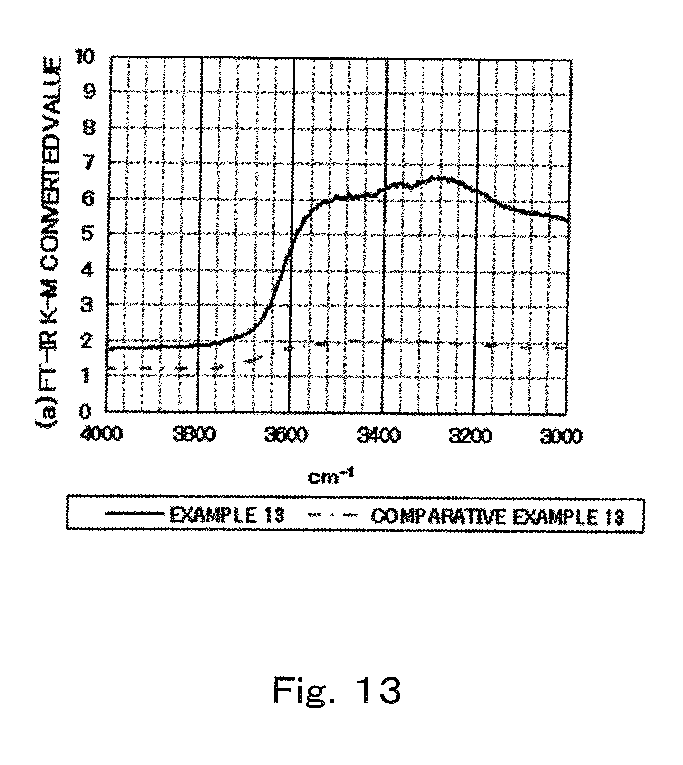

The values obtained by converting the infrared absorption spectra thus obtained into Kubelka-Munk function values are shown in FIGS. 9 to 13.

To confirm from the infrared absorption spectra shown in these diagrams that the phosphors obtained in Examples 9 to 13 and Comparative Examples 9 to 13 satisfy the conditions of the first aspect of the invention, calculations were carried out in the same way as in Example 1. These results are presented in Tables 18 to 27.

[Table 18]

Table 18: Example 9

| cm$^{-1}$ | (a) | (b) | |
|---|---|---|---|
| 3593 | 1.559E+01 | -6.978E-02 | |
| 3595 | 1.545E+01 | -3.199E-02 | |
| 3597 | 1.539E+01 | -7.647E-02 | |
| 3599 | 1.524E+01 | -3.195E-02 | |
| 3601 | 1.518E+01 | -1.412E-02 | |
| 3603 | 1.515E+01 | -6.774E-02 | |
| 3604 | 1.502E+01 | -6.270E-02 | |
| 3606 | 1.490E+01 | -1.318E-02 | |
| 3608 | 1.488E+01 | -4.664E-02 | |
| 3610 | 1.479E+01 | | |
| *Average value for (b) from 3593 to 3608cm$^{-1}$ | | | -4.606E-02 |
| *Maximum value for 3250 to 3500cm$^{-1}$ | | | 1.860E+01 |
| Above average value/maximum value | | | -2.5E-03 |

[Table 19]

Table 19: Comparative Example 9

| cm$^{-1}$ | (a) | (b) |
|---|---|---|
| 3593 | 1.145E+01 | 5.156E-03 |
| 3595 | 1.146E+01 | -3.319E-02 |
| 3597 | 1.140E+01 | -3.597E-02 |
| 3599 | 1.133E+01 | 3.172E-02 |
| 3601 | 1.139E+01 | 1.063E-03 |
| 3603 | 1.139E+01 | -3.592E-02 |
| 3604 | 1.132E+01 | -3.775E-02 |
| 3606 | 1.125E+01 | -8.973E-03 |
| 3608 | 1.123E+01 | 5.636E-02 |
| 3610 | 1.134E+01 | |
| *Average value for (b) from 3593 to 3608cm$^{-1}$ | | -6.389E-03 |
| *Maximum value for 3250 to 3500cm$^{-1}$ | | 1.300E+01 |
| Above average value/maximum value | | -4.9E-04 |

[Table 20]

Table 20: Example 10

| cm$^{-1}$ | (a) | (b) | |
|---|---|---|---|
| 3593 | 2.413E+00 | -1.048E-02 | |
| 3595 | 2.393E+00 | -1.018E-02 | |
| 3597 | 2.373E+00 | -1.001E-02 | |
| 3599 | 2.354E+00 | -4.853E-03 | |
| 3601 | 2.344E+00 | -1.077E-02 | |
| 3603 | 2.324E+00 | -1.263E-02 | |
| 3604 | 2.299E+00 | -1.331E-02 | |
| 3606 | 2.274E+00 | -7.139E-03 | |
| 3608 | 2.260E+00 | -9.217E-03 | |
| 3610 | 2.242E+00 | | |
| *Average value for (b) from 3593 to 3608cm$^{-1}$ | | | -9.842E-03 |
| *Maximum value for 3250 to 3500cm$^{-1}$ | | | 2.878E+00 |
| Above average value/maximum value | | | -3.4E-03 |

[Table 21]

Table 21: Comparative Example 10

| cm$^{-1}$ | (a) | (b) | |
|---|---|---|---|
| 3593 | 1.728E+00 | -1.696E-03 | |
| 3595 | 1.725E+00 | -2.120E-03 | |
| 3597 | 1.720E+00 | -8.450E-04 | |

(continued)

| cm⁻¹ | (a) | (b) | |
|---|---|---|---|
| 3599 | 1.719E+00 | -3.184E-03 | |
| 3601 | 1.713E+00 | -4.031E-03 | |
| 3603 | 1.705E+00 | -5.306E-04 | |
| 3604 | 1.704E+00 | 1.969E-03 | |
| 3606 | 1.708E+00 | 4.735E-04 | |
| 3608 | 1.709E+00 | -4.662E-03 | |
| 3610 | 1.700E+00 | | |
| *Average value for (b) from 3593 to 3608cm⁻¹ | | | -1.625E-03 |
| *Maximum value for 3250 to 3500cm⁻¹ | | | 1.962E+00 |
| Above average value/maximum value | | | -8.3E-04 |

[Table 22]

Table 22: Example 11

| cm⁻¹ | (a) | (b) | |
|---|---|---|---|
| 3593 | 2.490E+00 | -1.170E-02 | |
| 3595 | 2.467E+00 | -1.824E-02 | |
| 3597 | 2.432E+00 | -1.194E-02 | |
| 3599 | 2.409E+00 | -5.759E-03 | |
| 3601 | 2.398E+00 | -6.282E-03 | |
| 3603 | 2.386E+00 | -9.835E-03 | |
| 3604 | 2.367E+00 | -1.695E-02 | |
| 3606 | 2.334E+00 | -1.225E-02 | |
| 3608 | 2.310E+00 | -1.057E-02 | |
| 3610 | 2.290E+00 | | |
| *Average value for (b) from 3593 to 3608cm⁻¹ | | | -1.150E-02 |
| *Maximum value for 3250 to 3500cm⁻¹ | | | 2.850E+00 |
| Above average value/maximum value | | | -4.0E-03 |

[Table 23]

Table 23: Comparative Example 11

| cm⁻¹ | (a) | (b) | |
|---|---|---|---|
| 3593 | 1.495E+00 | -2.042E-03 | |
| 3595 | 1.491E+00 | -1.436E-03 | |
| 3597 | 1.489E+00 | 8.424E-04 | |
| 3599 | 1.490E+00 | 2.796E-04 | |
| 3601 | 1.491E+00 | -3.209E-03 | |
| 3603 | 1.485E+00 | -4.640E-03 | |
| 3604 | 1.476E+00 | -1.363E-03 | |

(continued)

| cm⁻¹ | (a) | (b) | |
|------|-----|-----|---|
| 3606 | 1.473E+00 | 9.196E-04 | |
| 3608 | 1.475E+00 | 4.044E-05 | |
| 3610 | 1.475E+00 | | |
| *Average value for (b) from 3593 to 3608cm⁻¹ | | | -1.179E-03 |
| *Maximum value for 3250 to 3500cm⁻¹ | | | 1.659E+00 |
| Above average value/maximum value | | | -7.1E-04 |

[Table 24]

Table 24: Example 12

| cm⁻¹ | (a) | (b) | |
|------|-----|-----|---|
| 3593 | 2.818E+00 | -1.630E-02 | |
| 3595 | 2.787E+00 | -1.638E-02 | |
| 3597 | 2.755E+00 | -1.346E-02 | |
| 3599 | 2.729E+00 | -1.380E-02 | |
| 3601 | 2.703E+00 | -1.148E-02 | |
| 3603 | 2.680E+00 | -1.336E-02 | |
| 3604 | 2.655E+00 | -1.896E-02 | |
| 3606 | 2.628E+00 | -1.868E-02 | |
| 3608 | 2.582E+00 | -1.717E-02 | |
| 3610 | 2.549E+00 | | |
| *Average value for (b) from 3593 to 3608cm⁻¹ | | | -1.551E-02 |
| *Maximum value for 3250 to 3500cm⁻¹ | | | 3.305E+00 |
| Above average value/maximum value | | | -4.7E-03 |

[Table 25]

Table 25: Comparative Example 12

| cm⁻¹ | (a) | (b) | |
|------|-----|-----|---|
| 3593 | 1.728E+00 | -1.696E-03 | |
| 3595 | 1.725E+00 | -2.120E-03 | |
| 3597 | 1.720E+00 | -8.450E-04 | |
| 3599 | 1.719E+00 | -3.184E-03 | |
| 3601 | 1.713E+00 | -4.031E-03 | |
| 3603 | 1.705E+00 | -5.306E-04 | |
| 3604 | 1.704E+00 | 1.969E-03 | |
| 3606 | 1.708E+00 | 4.735E-04 | |
| 3608 | 1.709E+00 | -4.662E-03 | |
| 3610 | 1.700E+00 | | |
| *Average value for (b) from 3593 to 3608cm⁻¹ | | | -1.625E-03 |

(continued)

| cm$^{-1}$ | (a) | (b) | |
|---|---|---|---|
| *Maximum value for 3250 to 3500cm$^{-1}$ | | | 1.962E+00 |
| Above average value/maximum value | | | -8.3E-04 |

[Table 26]

Table 26: Example 13

| cm$^{-1}$ | (a) | (b) | |
|---|---|---|---|
| 3593 | 4.898E+00 | | -3.467E-02 |
| 3595 | 4.831E+00 | | -2.178E-02 |
| 3597 | 4.789E+00 | | -3.884E-02 |
| 3599 | 4.714E+00 | | -4.018E-02 |
| 3601 | 4.636E+00 | | -2.952E-02 |
| 3603 | 4.580E+00 | | -3.487E-02 |
| 3604 | 4.512E+00 | -3.843E-02 | |
| 3606 | 4.438E+00 | -3.237E-02 | |
| 3608 | 4.376E+00 | -3.740E-02 | |
| 3610 | 4.304E+00 | | |
| *Average value for (b) from 3593 to 3608cm$^{-1}$ | | | -3.423E-02 |
| *Maximum value for 3250 to 3500cm$^{-1}$ | | | 6.658E+00 |
| Above average value/maximum value | | | -5.1E-03 |

[Table 27]

Table 27: Comparative Example 13

| cm$^{-1}$ | (a) | (b) | |
|---|---|---|---|
| 3593 | 1.805E+00 | -2.817E-03 | |
| 3595 | 1.800E+00 | -7.989E-04 | |
| 3597 | 1.798E+00 | -2.791E-03 | |
| 3599 | 1.793E+00 | -3.022E-03 | |
| 3601 | 1.787E+00 | -2.415E-03 | |
| 3603 | 1.783E+00 | -3.198E-03 | |
| 3604 | 1.776E+00 | 7.932E-05 | |
| 3606 | 1.777E+00 | 1.541E-03 | |
| 3608 | 1.779E+00 | -2.240E-03 | |
| 3610 | 1.775E+00 | | |
| *Average value for (b) from 3593 to 3608cm$^{-1}$ | | | -1.740E-03 |
| *Maximum value for 3250 to 3500cm$^{-1}$ | | | 2.043E+00 |
| Above average value/maximum value | | | -8.5E-04 |

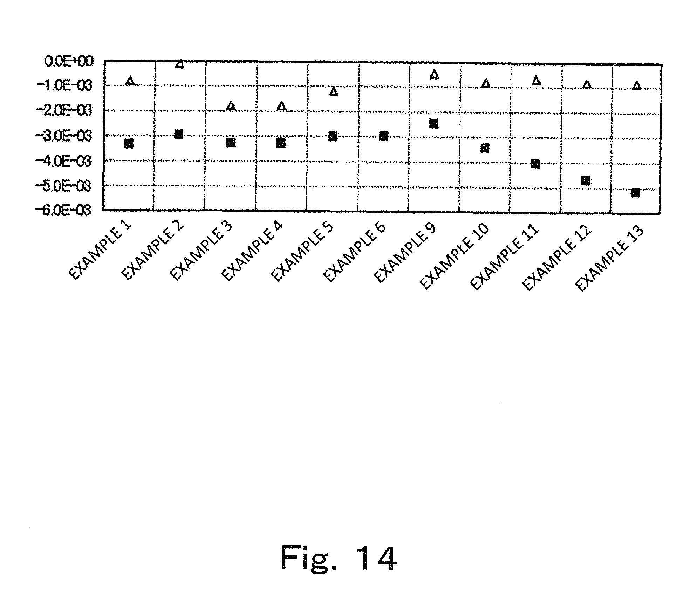

The calculated values thus obtained are shown in FIG. 14. The white triangles in FIG. 14 represent the values of Comparative Examples in which vapor heat treatment was not carried out, and the black squares represent the values of Examples in which vapor heat treatment was carried out. It is apparent here that the Examples and the Comparative Examples can be clearly distinguished as specified in the first aspect of the invention.

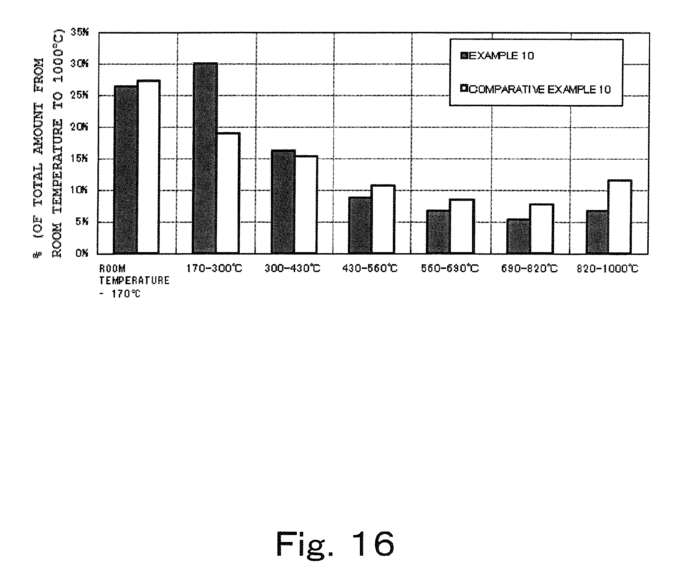

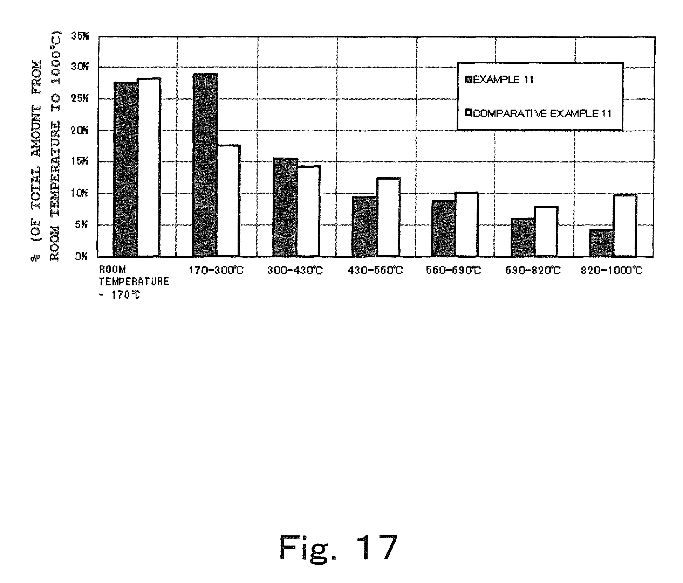

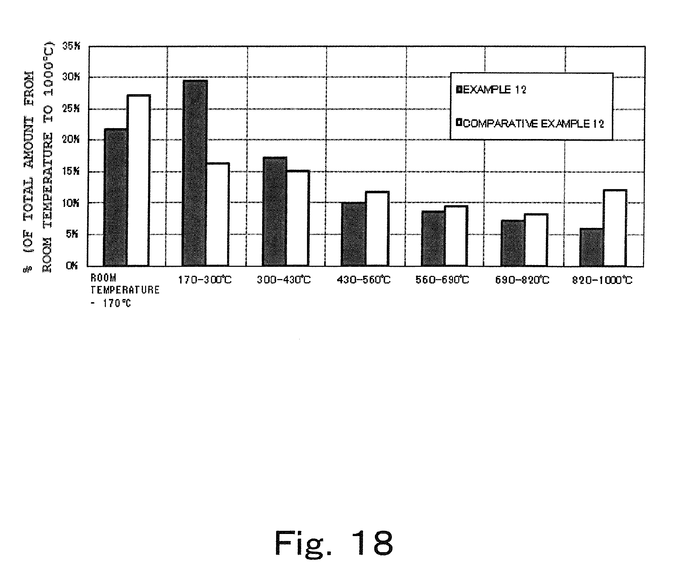

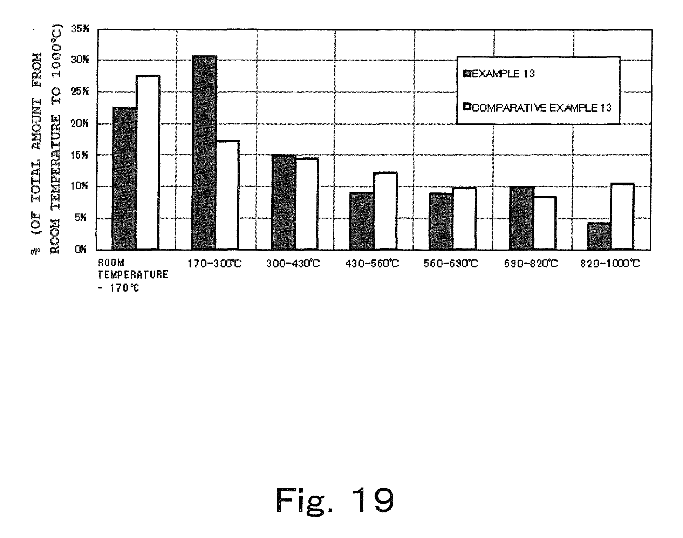

With regard to the phosphors mentioned in Examples 9 to 13 and Comparative Examples 9 to 13, analyses of the amount of emitted gases were carried out in order to measure the amount of moisture adsorbed onto the phosphors. The results are shown in FIGS. 15 to 19. The proportions of desorbed water at between 170°C and 300°C in the Examples and the Comparative Examples are compared in Table 28.

[Table 28]

Table 28

|  | Proportion of desorbed water at 170 to 300°C |  | Proportion of desorbed water at 170 to 300°C |
| --- | --- | --- | --- |
| Example 1 | 36% | Comparative Example 1 | 21% |
| Example 9 | 31% | Comparative Example 9 | 18% |
| Example 10 | 30% | Comparative Example 10 | 19% |
| Example 11 | 29% | Comparative Example 11 | 18% |
| Example 12 | 29% | Comparative Example 12 | 16% |
| Example 13 | 31% | Comparative Example 13 | 17% |

From these results, in the phosphors of the invention, because the adsorbed moisture has special hydrogen bonds, the moisture desorbs at higher temperatures than normal, with at least 25% of the entire amount of adsorbed water desorbing at between 170°C and 300°C. By contrast, for the phosphors in the Comparative Examples, even in Comparative Example 1 having the largest value, the proportion of water that desorbs at between 170°C and 300°C is at most only 21% with, as shown in the respective figures, the proportion of water that desorbs at below 170°C being highest. In each of the phosphors of the invention, it is apparent that the amount of water which desorbs at 170°C or more and 300°C or less is highest and accounts for at least 25% of the total.

While the invention has been described in detail and with reference to specific embodiments thereof, it will be apparent to one skilled in the art that various changes and modifications can be made therein without departing from the spirit and scope thereof.

INDUSTRIAL APPLICABILITY

This invention is able to provide phosphors having a high luminance and high efficiency. Particularly when used in white LEDs, these phosphors can be advantageously used for illumination and backlights in displays.

**Claims**

1. A nitride phosphor of general formula (1) below

$$Ln_xSi_yN_n:Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),
the nitride phosphor having an infrared absorption spectrum, as measured by a diffuse reflectance method at measurement intervals of 2 cm$^{-1}$ or less, that satisfies the following condition:

    a) when converting the obtained infrared absorption spectrum into Kubelka-Munk function values, calculating slopes (referred to below as "differential values") between two adjoining measured values among the converted values in the range of 3593 $cm^{-1}$ to 3608 $cm^{-1}$ and determining the average of the differential values in the range of 3593 $cm^{-1}$ to 3608 $cm^{-1}$, and

b) when converting the obtained infrared absorption spectrum into Kubelka-Munk function values and determining a maximum value in the range of 3500 $cm^{-1}$ to 3250 $cm^{-1}$,

c) a value obtained by dividing the average of the differential values from 3593 $cm^{-1}$ to 3608 $cm^{-1}$ by the maximum value in the range of 3500 $cm^{-1}$ to 3250 $cm^{-1}$ is $-2.4 \times 10^{-3}$ or less.

2. A nitride phosphor of general formula (1) below

$$Ln_xSi_yN_n{:}Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),

wherein, in thermogravimetry, at least 25% of total adsorbed water that has adsorbed to the nitride phosphor desorbs at between 170°C and 300°C.

3. The nitride phosphor according to claim 2, wherein at least 30% of the total adsorbed water desorbs at between 170°C and 300°C.

4. A nitride phosphor of general formula (1) below

$$Ln_xSi_yN_n{:}\ Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),

wherein the ratio of a specific surface area determined by a BET method with respect to a specific surface area calculated from an average particle diameter measured by a Coulter counter method is 20 or less.

5. The nitride phosphor according to any one of claims 1 to 4, wherein the nitride phosphor has an internal quantum efficiency of at least 71%.

6. A method of manufacturing a nitride phosphor of general formula (1) below

$$Ln_xSi_yN_n{:}\ Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$),

the method comprising the steps of:

preparing a raw material mixture for the nitride phosphor of general formula (1);
firing the raw material mixture; and
vapor heat-treating the fired material obtained in the firing step.

7. A method of manufacturing a nitride phosphor, comprising the steps of:

coating a rare-earth hydroxide onto a surface of a phosphor; and
vapor heat-treating the nitride phosphor coated with the rare-earth hydroxide.

8. The method of manufacturing a nitride phosphor according to claim 7, wherein the nitride phosphor is a nitride phosphor of general formula (1) below

$$Ln_xSi_yN_n{:}\ Z \qquad (1)$$

(wherein Ln is a rare-earth element exclusive of an element used as an activator, Z is an activator, x satisfies $2.7 \leq x \leq 3.3$, y satisfies $5.4 \leq y \leq 6.6$, and n satisfies $10 \leq n \leq 12$), or is a phosphor including $\beta$-SiAlON, $\alpha$-SiAlON, $CaAlSiN_3$ or $CaAlSi_4N_7$ as a host.

9. A nitride phosphor, having an infrared absorption spectrum, as measured by a diffuse reflectance method at measurement intervals of 2 cm$^{-1}$ or less, that satisfies the following condition:

> a) when converting the obtained infrared absorption spectrum into Kubelka-Munk function values, calculating slopes (referred to below as "differential values") between two adjoining measured values among the converted values in the range of 3593 cm$^{-1}$ to 3608 cm$^{-1}$ and determining the average of the differential values in the range of 3593 cm$^{-1}$ to 3608 cm$^{-1}$, and
> b) when converting the obtained infrared absorption spectrum into Kubelka-Munk function values and determining a maximum value in the range of 3500 cm$^{-1}$ to 3250 cm$^{-1}$,
> c) a value obtained by dividing the average of the differential values from 3593 cm$^{-1}$ to 3608 cm$^{-1}$ by the maximum value in the range of 3500 cm$^{-1}$ to 3250 cm$^{-1}$ is -2.4 x 10$^{-3}$ or less.

10. A nitride phosphor, wherein, in thermogravimetry, at least 25% of total adsorbed water that has adsorbed to the nitride phosphor desorbs at between 170°C and 300°C.

11. A nitride phosphor, wherein the ratio of a specific surface area determined by a BET method with respect to a specific surface area calculated from an average particle diameter measured by a Coulter counter method is 20 or less.

12. The nitride phosphor according to any one of claims 9 to 11, wherein the nitride phosphor has an internal quantum efficiency of at least 71%.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

**INTERNATIONAL SEARCH REPORT**

International application No.

PCT/JP2012/079596

A. CLASSIFICATION OF SUBJECT MATTER
*C09K11/79*(2006.01)i, *C09K11/08*(2006.01)i

According to International Patent Classification (IPC) or to both national classification and IPC

B. FIELDS SEARCHED

Minimum documentation searched (classification system followed by classification symbols)
C09K11/79, C09K11/08

Documentation searched other than minimum documentation to the extent that such documents are included in the fields searched
Jitsuyo Shinan Koho          1922–1996     Jitsuyo Shinan Toroku Koho    1996–2013
Kokai Jitsuyo Shinan Koho    1971–2013     Toroku Jitsuyo Shinan Koho    1994–2013

Electronic data base consulted during the international search (name of data base and, where practicable, search terms used)
CAPlus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2010/114061 A1 (Mitsubishi Chemical Corp.), 07 October 2010 (07.10.2010), claims; examples; table 12-6 & EP 2415848 A1        & CN 102361956 A | 1,5 |
| X | JP 2009-249445 A (Mitsubishi Chemical Corp.), 29 October 2009 (29.10.2009), claims; examples (particularly, example 3) (Family: none) | 1,5 |
| X | JP 2008-285659 A (Mitsubishi Chemical Corp.), 27 November 2008 (27.11.2008), claims; examples & JP 2010-84151 A        & US 2010/0085728 A1 & EP 2141216 A1        & WO 2008/132954 A1 & CN 101663372 A | 1,5 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    31 January, 2013 (31.01.13) | Date of mailing of the international search report<br>    12 February, 2013 (12.02.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**EP 2 781 577 A1**

<table>
<tr><td colspan="3" align="center">INTERNATIONAL SEARCH REPORT</td><td>International application No.<br>PCT/JP2012/079596</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2008-088362 A  (Mitsubishi Chemical Corp.),<br>17 April 2008 (17.04.2008),<br>claims; examples<br>(Family: none) | 1,5 |
| X | JP 2003-206481 A  (Patent Treuhand Gesellschaft<br>fur elektrische Gluhlampen mbH),<br>22 July 2003 (22.07.2003),<br>claims; examples; table 4<br>& US 2003/0094893 A1     & EP 1296376 A2<br>& EP 2264762 A2          & DE 10147040 A1 | 1,5 |
| X | JP 2004-311562 A  (Tadahiro OMI),<br>04 November 2004 (04.11.2004),<br>claims<br>& US 2007/0052042 A1     & EP 1617483 A1<br>& WO 2004/090991 A1      & KR 10-2005-0116840 A<br>& CN 1768431 A | 1,5 |
| P,X | WO 2012/017949 A1  (Ube Industries, Ltd.),<br>09 February 2012 (09.02.2012),<br>claims; paragraph [0102]; examples<br>(Family: none) | 1,5 |

**INTERNATIONAL SEARCH REPORT**

International application No.

PCT/JP2012/079596

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
1 and 5

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

Continuation of Box No.III of continuation of first sheet(2)

Claims of the present international application are configured from eight series dependency systems which are stated below.
1. Dependency system 1 (main invention):
Claim 1
The part of claim 5 which is dependent on claim 1 only
2. Dependency system 2 (second invention):
Claims 2 and 3
The part of claim 5 which is dependent on claims 2 and 3 only
3. Dependency system 3 (third invention):
Claim 4
The part of claim 5 which is dependent on claim 4 only
4. Dependency system 4 (fourth invention):
Claim 6
5. Dependency system 5 (fifth invention):
Claims 7 and 8
6. Dependency system 6 (sixth invention):
Claim 9
The part of claim 12 which is dependent on claim 9 only
7. Dependency system 7 (seventh invention):
Claim 10
The part of claim 12 which is dependent on claim 10 only
8. Dependency system 8 (eighth invention):
Claim 11
The part of claim 12 which is dependent on claim 11 only
Although it can be said that the common technical feature of the main invention and the second to eighth inventions is "a nitride fluophor", "a nitride fluophor" had been widely known as described in Documents A-F. Therefore, this technical feature cannot be considered as "a special technical feature" in the meaning of PCT Rule 13.2, second sentence.
Consequently, the above-said dependency systems (main invention and second to eighth inventions) have no technical relationship involving one or more of the same or corresponding "special technical features", and therefore, said systems are not so linked as to form a single general inventive concept.
Document A: WO 2010/114061 A1 (Mitsubishi Chemical Corp.), 07 October 2010 (07.10.2010)
Document B: JP 2009-249445 A (Mitsubishi Chemical Corp.), 29.October 2009 (29.10.2009)
Document C: JP 2008-285659 A (Mitsubishi Chemical Corp.), 27 November 2008 (27.11.2008)
Document D: JP 2008-088362 A (Mitsubishi Chemical Corp.), 17 April 2008 (17.04.2008)
Document E: JP 2003-206481 A (Patent Treuhand Gesellschaft fur elektrische Gluhlampen mbH), 22 July 2003 (22.07.2003)
Document F: JP 2004-311562 A (Tadahiro OMI), 04 November 2004 (04.11.2004)

Form PCT/ISA/210 (extra sheet) (July 2009)

**EP 2 781 577 A1**

**Patent documents cited in the description**

- WO 2008132954 A
- WO 2010114061 A
- JP 2010214289 A